# EUROPEAN PATENT APPLICATION

(11) **EP 4 715 486 A1**
(43) Date of publication of application: **25.03.2026**
(21) Application number: 25733840.0
(22) Date of filing: 16.06.2025
(51) Int. Cl.: G04B 37/08, G04B 39/02, G04G 21/04, G06F 1/16

(54) **VENTILATION STRUCTURE OF ELECTRONIC DEVICE AND ELECTRONIC DEVICE COMPRISING SAME**

(30) Priority: 10.07.2024 KR 20240091393; 04.10.2024 KR 20240134793
(71) Applicant: Samsung Electronics Co., Ltd, Suwon-si, Gyeonggi-do 16677 (KR)
(72) Inventor: JANG, Dongheon, Suwon-si, Gyeonggi-do 16677 (KR); LEE, Sanghwa, Suwon-si, Gyeonggi-do 16677 (KR)
(74) Representative: Gulde & Partner
(86) International application number: PCT/KR2025/008237
(87) International publication number: WO 2026/014739

(57) **Abstract**

An electronic device according to an embodiment of the disclosure may include: a housing including a sound hole; a microphone module which includes a microphone hole and is disposed in the housing; a guide member including a first space between the sound hole and the microphone hole; and a ventilation member disposed between the housing and the microphone module, wherein the ventilation member includes a first conduit including a (1-1)th terminal end part and a (1-2)th terminal end part; an inlet which is connected to the first conduit extending from the (1-1)th terminal end part and the (1-2)th terminal end part and allows a fluid to communicate with the first space; a second conduit including a (2-1)th terminal end part and a (2-2)th terminal end part; an outlet which is connected to the second conduit extending from the (2-1)th terminal end part and the (2-2)th terminal end part and allows a fluid to communicate with a second space which is an outer space of the guide member; and at least one connection conduit configured to connect the first conduit and the second conduit, wherein the second conduit has a circumference greater than the circumference of the first conduit.

## Description

### [Technical Field]

Various embodiments disclosed in the present document relate to an electronic device including a ventilation structure.

### [Background Art]

With the advancement of technology, user terminals such as smartphones and tablets, wearable electronic devices (e.g., smart watches) are becoming more widespread. Such wearable electronic devices may include a smart watch which is worn on a body part (e.g., the wrist) of a user and performs various functions.

The above-described information may be provided as related art for the purpose of assisting in understanding the disclosure. No assertion or decision is made as to whether any of the above might be applicable as prior art with regard to the disclosure.

### [Disclosure of Invention]

### [Technical Problem]

An electronic device such as a smart watch may include a microphone used for calls and recording. A waterproof member may be disposed inside the electronic device to prevent or block moisture and the like from entering the microphone. An external sound may be transmitted to the waterproof member through a sound hole of the electronic device, and may be received by the microphone disposed inside the electronic device as the waterproof member vibrates. A sound space (e.g., a first space) may be formed inside the electronic device to allow an external sound to be received by the microphone. The first space may be a space formed by mechanical members positioned between the waterproof member and the microphone. The mechanical members may include a waterproof member which blocks foreign substances (moisture and dust) introduced through the sound hole of the electronic device from being transferred to the microphone and prevents foreign substances from entering other electronic components. Meanwhile, due to the assembly of the electronic device and the temperature change inside the electronic device, changes in air pressure between the sound space and an outer space (e.g., second space) of the mechanical members may occur. Therefore, imbalance in the flatness of the waterproof member, such as wrinkling of the waterproof member, may occur. The imbalance in the flatness of the waterproof member may cause changes in the sound quality of the microphone. The electronic device may include a ventilation structure through which air is ventilated in order to balance air pressure between the first space and the second space.

An electronic device such as a smart watch may include a speaker used for calls or recording, or in a ring tone state. A speaker disposed inside an electronic device may emit a sound to the outside, and also may emit a part of the sound to the inside of an electronic device. In case that a sound of the speaker is emitted to the inside of the electronic device, the sound of the speaker may be transmitted to a microphone through a ventilation structure. In this case, during communication using the electronic device, a sound of the speaker may enter the microphone and thus an echo may occur. Therefore, the call performance when two callers speak simultaneously may be deteriorated.

The technical subjects pursued in the disclosure may not be limited to the above-mentioned technical subjects, and other technical subjects which are not mentioned may be clearly understood from the following descriptions by those skilled in the art to which the disclosure pertains.

### [Solution to Problem]

An electronic device according to an embodiment of the disclosure may include: a housing including a sound hole; a microphone module which includes a microphone hole and is disposed in the housing; a guide member including a first space between the sound hole and the microphone hole; and a ventilation member disposed between the housing and the microphone module, wherein the ventilation member includes a first conduit including a (1-1)th terminal end part and a (1-2)th terminal end part; an inlet which is connected to the first conduit extending from the (1-1)th terminal end part and the (1-2)th terminal end part and allows a fluid to communicate with the first space; a second conduit including a (2-1)th terminal end part and a (2-2)th terminal end part; an outlet which is connected to the second conduit extending from the (2-1)th terminal end part and the (2-2)th terminal end part and allows a fluid to communicate with a second space which is an outer space of the guide member; and at least one connection conduit configured to connect the first conduit and the second conduit, wherein the second conduit has a circumference greater than the circumference of the first conduit.

A ventilation member according to an embodiment of the disclosure may include a first conduit comprising a (1-1)th terminal end part and a (1-2)th terminal end part; an inlet connected to the first conduit extending from the (1-1)th terminal end part and the (1-2)th terminal end part; a second conduit comprising a (2-1)th terminal end part and a (2-2)th terminal end part; an outlet connected to the second conduit extending from the (2-1)th terminal end part and the (2-2)th terminal end part; and at least one connection conduit configured to connect the first conduit and the second conduit, wherein the second conduit has a circumference greater than the circumference of the first conduit.

### [Advantageous Effects of Invention]

According to an embodiment disclosed in the document, an electronic device may include a ventilation structure which allows air to be slowly ventilated between the inside and outside of a microphone so that air pressure balance between the inside and the outside of the microphone is achieved, and controls a sound of a speaker, which is transmitted to the microphone through a partition wall part segmenting a conduit through which air is ventilated. Accordingly, the echo, which may be caused by the speaker sound entering the microphone in a situation of communication, can be minimized, and the call performance when two callers speak simultaneously can be improved.

### [Brief Description of Drawings]

With regard to the description of the drawings, the same or like reference signs may be used to designate the same or like elements.
FIG. 1 is a block diagram of an electronic device in a network environment according to various embodiments.
FIG. 2 is a front perspective view of an electronic device according to an embodiment of the disclosure.
FIG. 3 is a rear perspective view of an electronic device according to an embodiment of the disclosure.
FIG. 4 is an exploded perspective view of the electronic device illustrated in FIG. 2.
FIG. 5A is an exploded perspective view of an electronic device including a ventilation member made of a metal material, which is positioned between a microphone module and a shielding member according to an embodiment of the disclosure.
FIG. 5B is a cross sectional view of FIG. 5A, which is taken along line A-A' in the bracket illustrated in FIG. 4.
FIG. 6A is an exploded perspective view of an electronic device including a ventilation member made of a metal material, which is positioned between a shielding member and a support member according to an embodiment of the disclosure.
FIG. 6B is a cross sectional view of FIG. 6A, which is taken along line A-A' in the bracket illustrated in FIG. 4.
FIG. 7A is an exploded perspective view of an electronic device including a ventilation member made of a fiber material, which is positioned between a shielding member and a support member according to an embodiment of the disclosure.
FIG. 7B is a cross sectional view of FIG. 7A, which is taken along line A-A' in the bracket illustrated in FIG. 4.
FIG. 8A is a plan view of a ventilation member in FIG. 5A, which includes two conduits.
FIG. 8B is a plan view of a ventilation member in FIG. 5A, which includes multiple conduits.
FIG. 8C is a plan view of the ventilation member in FIG. 5A, which includes multiple conduits through which the air having been introduced into an inlet moves to an outlet.
FIG. 8D is a plan view of the ventilation member in FIG. 5A, which includes multiple conduits through which the air having been introduced into an outlet moves to an inlet.
FIG. 9A and FIG. 9B are plan views of the ventilation member in FIG. 5A, in which the angle formed by a connection conduit and a first passage is equal to the angle formed by the connection conduit and a second passage.
FIG. 10A is a plan view of a ventilation member in FIG. 6A, which includes multiple conduits.
FIG. 10B is a plan view of a ventilation member in FIG. 6A, which includes multiple conduits through which the air having been introduced into an inlet moves to an outlet.
FIG. 10C is a plan view of a ventilation member of FIG. 6A, which includes multiple conduits through which the air having been introduced into an outlet moves to an inlet.
FIG. 11A is a plan view of a ventilation member in FIG. 7, which includes multiple conduits.
FIG. 11B is a plan view of a ventilation member in FIG. 7, which includes multiple conduits through which the air having been introduced into an inlet moves to an outlet.
FIG. 11C is a plan view of a ventilation member in FIG. 7, which includes multiple conduits through which the air having been introduced into an outlet moves to an inlet.

### [Mode for the Invention]

In the following description, various embodiments of the disclosure will be described with reference to the accompanying drawings. It should be appreciated that various embodiments of the disclosure and the terms used therein are not intended to limit the technological features set forth herein to particular embodiments and the disclosure includes various changes, equivalents, or alternatives for a corresponding embodiment.

With regard to the description of the drawings, similar reference numerals may be used to designate similar or relevant elements. A singular form of a noun corresponding to an item may include one or more of the items, unless the relevant context clearly indicates otherwise.

As used herein, each of such phrases as "A or B," "at least one of A and B," "at least one of A or B," "A, B, or C," "at least one of A, B, and C," and "at least one of A, B, or C" may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

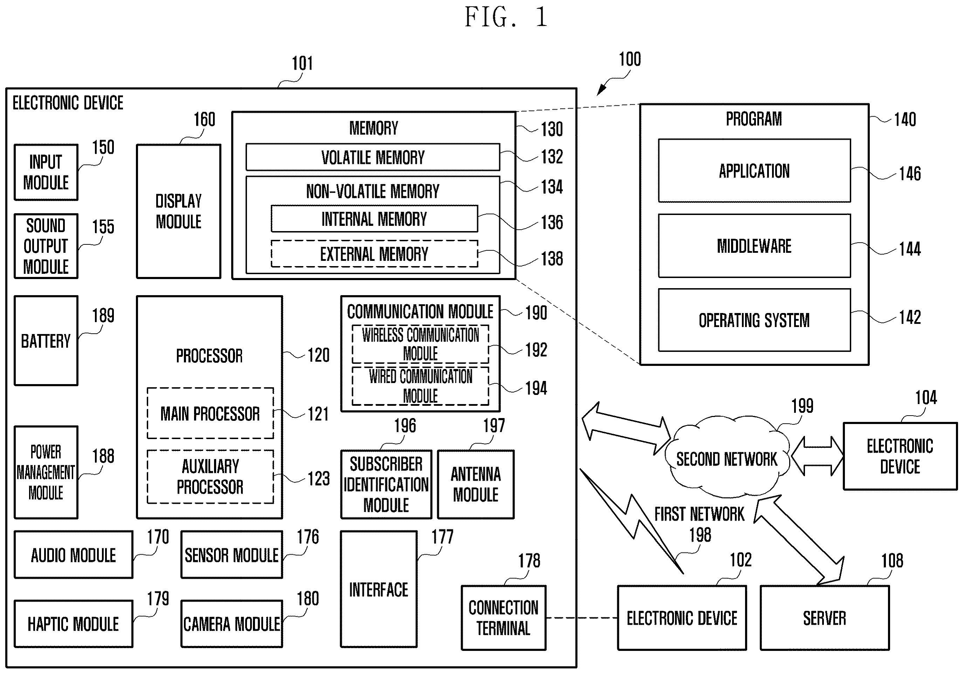

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

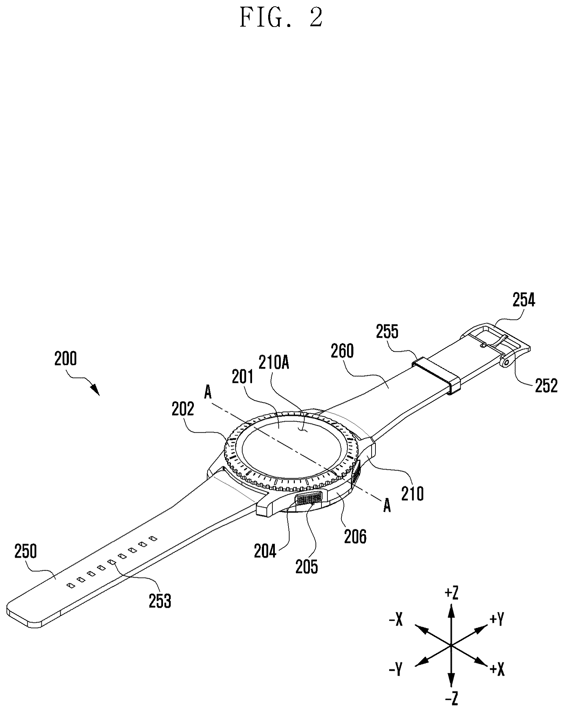

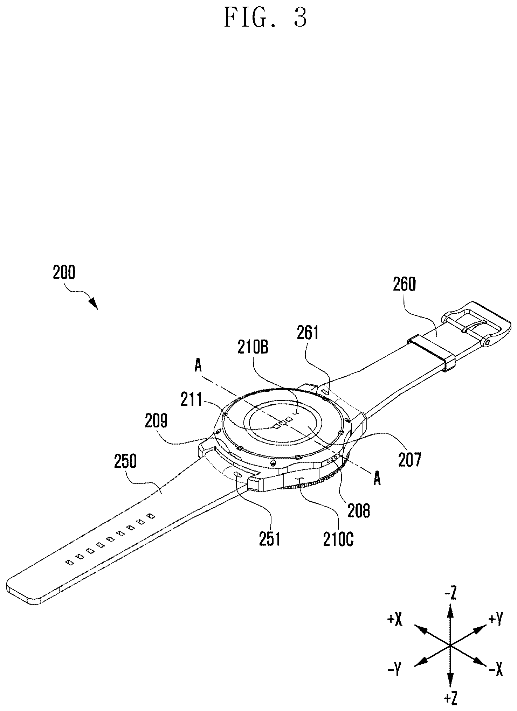

FIG. 2 is a front perspective view of an electronic device according to an embodiment of the disclosure. FIG. 3 is a rear perspective view of an electronic device according to an embodiment of the disclosure.

Referring to FIG. 2 and FIG. 3, an electronic device 200 according to an embodiment may include a housing 210 including a first surface (or a front surface) 210A, a second surface (or a rear surface) 210B, and a side surface 210C surrounding a space between the first surface 210A and the second surface 210B, and binding members 250 and 260 connected to at least portions of the housing 210 and configured to allow the electronic device 200 to be worn on a region (e.g., the wrist, the ankle, or the like) of the body of a user. In an embodiment (not shown), the housing 210 may also be referred to as a structure which forms a portion of the first surface 210A, the second surface 210B, and the side surface 210C in FIG. 2. According to an embodiment, the first surface 210A may be formed by a front plate 201 (e.g., a glass plate including various coating layers or a polymer plate), at least a portion of which is substantially transparent. The second surface 210B may be formed by a substantially opaque rear plate 207. For example, the rear plate 207 may be formed by coated or colored glass, ceramic, polymer, metal (e.g., aluminum, stainless steel (STS), or magnesium), or a combination of at least two of the above materials. The side surface 210C may be coupled to the front plate 201 and the rear plate 207, and may be formed by a side bezel structure (or a "side member") 206 including metal and/or polymer. In some embodiments, the rear plate 207 and the side bezel structure 206 may be integrally formed, and may include a same material (e.g., a metal material such as aluminum). The binding members 250 and 260 may be formed of various materials and in various forms. Each of the binding members may be formed in an integral type and may be formed to have a plurality of unit links coupled to be movable with respect to each other, by woven fabrics, leather, rubber, urethane, metal, ceramic, or a combination of at least two of the materials.

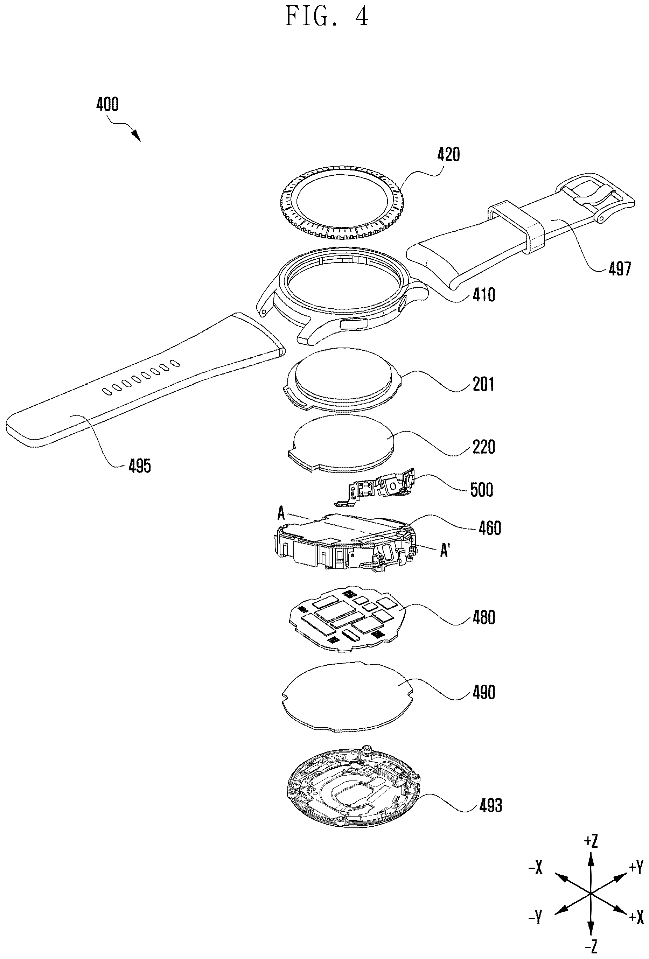

According to an embodiment, the electronic device 200 may include at least one of a display 220 (see FIG. 4), audio modules 205 and 208, a sensor module 211, key input devices 202, 203, and 204, and a connector hole 209. In some embodiments, the electronic device 200 may be configured such that at least one (e.g., the key input devices 202, 203, and 204, the connector hole 209, or the sensor module 211) of the elements is omitted therefrom or other elements are additionally included therein.

For example, the display 220 may be exposed through a substantial portion of the front plate 201. The shape of the display 220 may be a shape corresponding to the shape of the front plate 201, and may have various shapes such as a circle, an ellipse, or a polygon. The display 220 may be coupled to or disposed adjacent to a touch detection circuit, a pressure sensor capable of measuring the intensity (pressure) of touch, and/or a fingerprint sensor.

The audio modules 205 and 208 may include a microphone external hole 205 and a speaker hole 280. A microphone for obtaining external sound may be disposed in the microphone external hole 205, and in some embodiments, a plurality of microphones may be arranged to be able to detect the direction of sound. The speaker hole 208 may be used as an external speaker and a receiver for a phone call.

The sensor module 211 may generate an electrical signal or a data value corresponding to an internal operation state of the electronic device 200 or an external environmental state. For example, the sensor module 211 may include a biometric sensor module 211 (e.g., an HRM sensor) disposed on the second surface 210B of the housing 210. The electronic device 200 may further include a sensor module not illustrated, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor.

The key input devices 202, 203, and 204 may include a wheel key 202 which is disposed on the first surface 210A of the housing 210 and is rotatable in at least one direction, and/or side key buttons 203 and 204 arranged on the side surface 210C of the housing 210. The wheel key may have a shape corresponding to the shape of the front plate 201. In an embodiment, the electronic device 200 may not include a portion or the whole of the key input devices 202, 203, and 204 mentioned above, and the key input device 202, 203, or 204 not included therein may be implemented as a different type, such as a soft key, on the display 220. The connector hole 209 may include other connector holes (not shown) capable of accommodating a connector (for example, a USB connector) for transmitting or receiving electric power and/or data to or from an external electronic device and capable of accommodating a connector for transmitting or receiving an audio signal to or from an external electronic device. For example, the electronic device 200 may further include a connector cover (not shown) covering at least a portion of the connector hole 209 and blocking outer foreign materials from being introduced into the connector hole.

The binding members 250 and 260 may be detachably bound to at least partial regions of the housing 210 by using locking members 251 and 261. The binding members 250 and 260 may include one or more of a fixation member 252, a fixation member fastening hole 253, a band guide member 254, and a band fixation ring 255.

The fixation member 252 may be configured to allow the housing 210 and the bonding members 250 and 260 to be fixed to a region (e.g., the wrist or the ankle) of the body of a user. The fixation member fastening hole 253 may be formed to correspond to the fixation member 252 so that the housing 210 and the binding members 250 and 260 are fixed to a region of the body of a user. The band guide member 254 may be configured to limit a motion range of the fixation member 252 when the fixation member 252 is fastened to the fixation member fastening hole 253, and thus the binding members 250 and 260 may be bound to a region of the body of a user in a state of being in close contact therewith. The band fixation ring 255 may limit a motion range of the binding members 250 and 260 in a state where the fixation member 252 and the fixation member fastening hole 253 are fastened to each other.

FIG. 4 is an exploded perspective view of an electronic device illustrated in FIG. 2.

Referring to FIG. 4, an electronic device 400 may include a side bezel structure 410, a wheel key 420, a front plate 201, a display 220, a first antenna 450, a second antenna 455, a bracket 460, a battery 470, a printed circuit board 480, a sealing member 490, a rear plate 493, and binding members 495 and 497. At least one of elements of the electronic device 400 may be the same as or similar to at least one of elements of the electronic device 200 in FIG. 2 or FIG. 3, and overlapping descriptions will be omitted hereinafter. The bracket 460 may be disposed in the electronic device 400 to be connected to the side bezel structure 410 or to be integrally formed with the side bezel structure 410. For example, the bracket 460 may be formed of a metal material and/or a non-metal (e.g., polymer) material. The bracket 460 may have one surface to which the display 220 is coupled, and the other surface to which the printed circuit board 480 is coupled. A processor (e.g., the processor 120 in FIG. 1), a memory (e.g., the memory 130 in FIG. 1), and/or an interface (e.g., the interface 177 in FIG. 1) may be mounted on the printed circuit substrate 480. For example, the processor may include one or more of a central processing device, an application processor, a graphics processing unit (GPU), an application processor signal processing part, and a communication processor.

For example, the memory may include a volatile memory or a non-volatile memory. For example, the interface may include a high definition multimedia interface (HDMI), a universal serial bus (USB) interface, an SD card interface, and/or an audio interface. For example, the interface may electrically or physically connect the electronic device 400 to an external electronic device, and may include a USB connector, an SD card/MMC connector, or an audio connector.

The battery 470 may be a device for supplying electric power to at least one element of the electronic device 400, and for example, may include a non-rechargeable primary cell, a rechargeable secondary cell, or a fuel cell. For example, at least a portion of the battery 470 may be disposed on a plane substantially identical to the printed circuit board 480. The battery 470 may be integrally disposed inside the electronic device 200, or may also be disposed to be detachable/attachable from/to the electronic device 200.

The first antenna 450 may be disposed between the display 220 and the bracket 460. For example, the first antenna 450 may include a near field communication (NFC) antenna, a wireless charging antenna, and/or a magnetic secure transmission (MST) antenna. For example, the first antenna 450 may perform short-range communication with an external device, or may wirelessly transmit or receive electric power required for charging, and may transmit a short-range communication signal or a magnetic-based signal including payment data. In an embodiment, an antenna structure may be formed by a portion of the side bezel structure 410 and/or the bracket 460, or a combination thereof.

According to an embodiment, The second antenna 455 may be disposed between the printed circuit board 480 and the rear plate 493. For example, the second antenna 455 may include a near field communication (NFC) antenna, a wireless charging antenna, and/or a magnetic secure transmission (MST) antenna. For example, the second antenna 455 may perform short-range communication with an external device, or may wirelessly transmit or receive electric power required for charging, and may transmit a short-range communication signal or a magnetic-based signal including payment data. In another embodiment, an antenna structure may be formed by a portion of the side bezel structure 410 and/or the rear plate 493, or a combination thereof.

The sealing member 490 may be disposed between the side bezel structure 410 and the rear plate 493. The sealing member 490 may be configured to block moisture and foreign materials from being introduced from the outside into a space surrounded by the side bezel structure 410 and the rear plate 493.

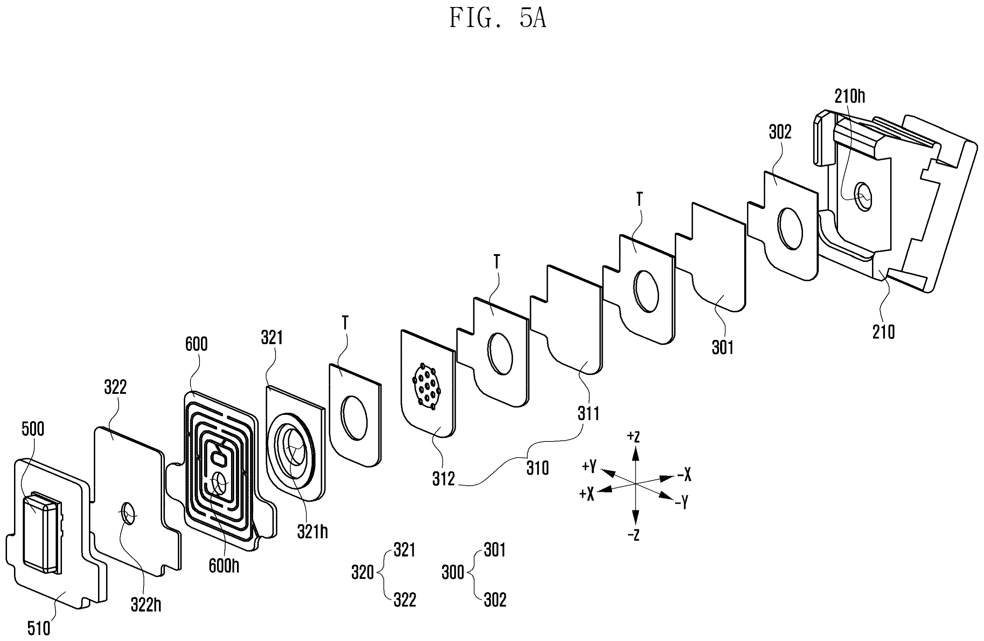

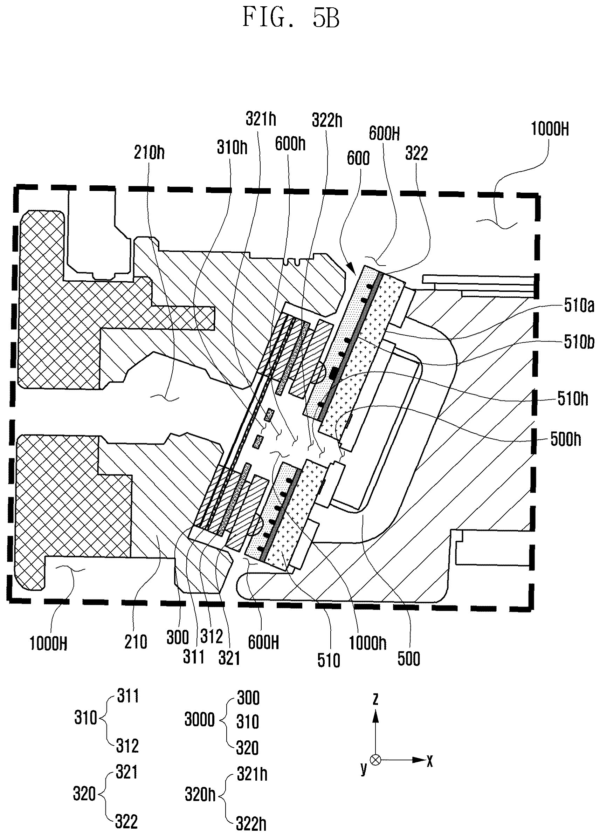

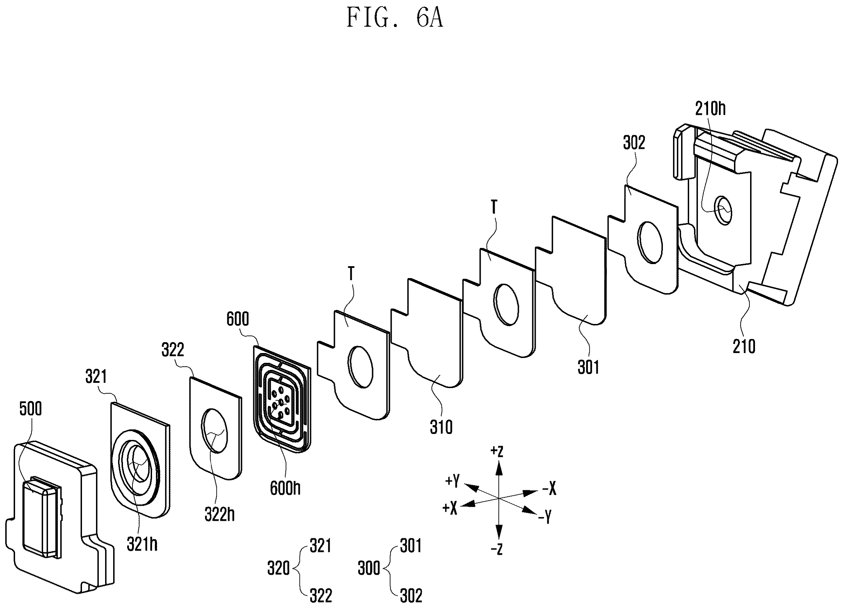

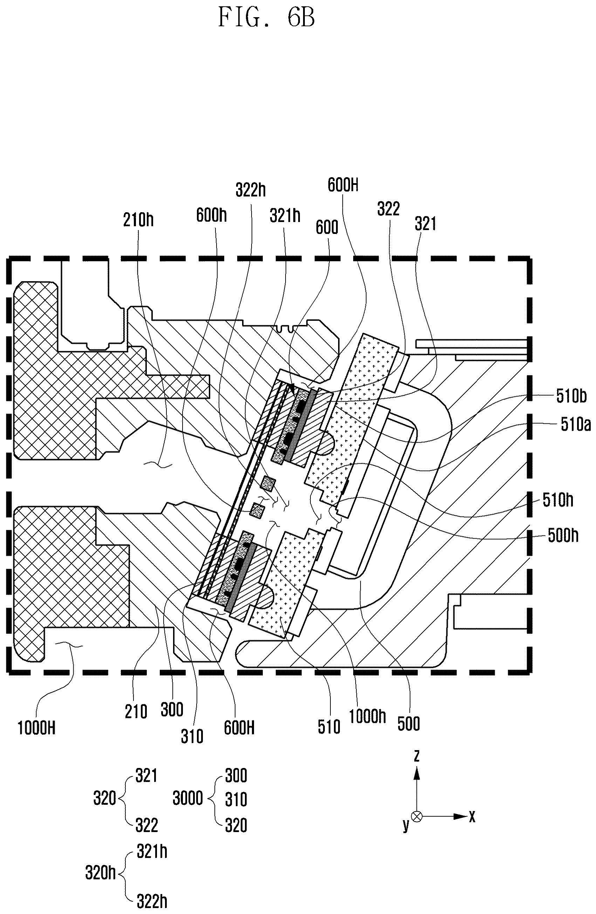

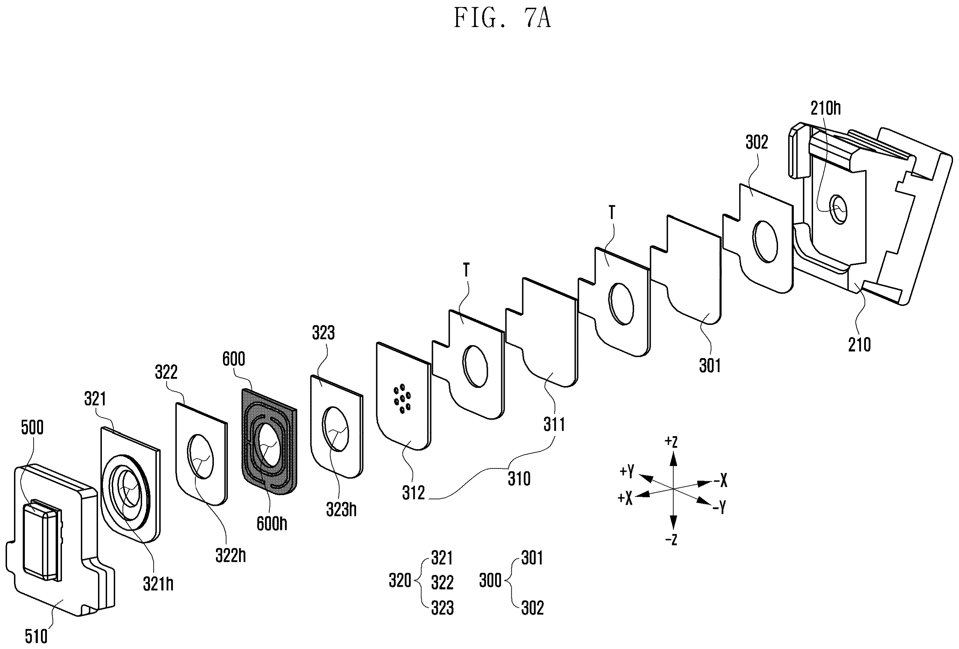

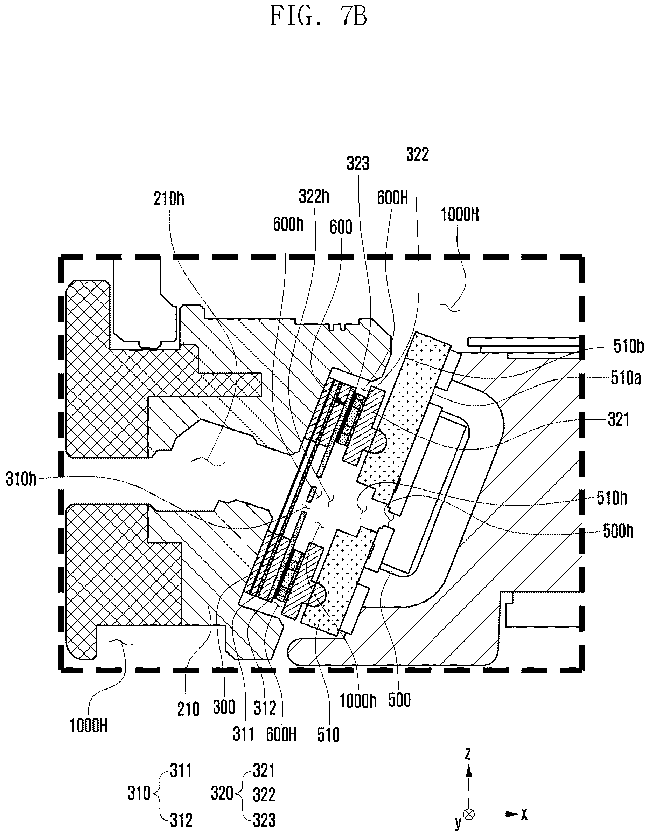

FIG. 5A is an exploded perspective view of an electronic device including a ventilation member made of a metal material, which is positioned between a microphone module and a shielding member according to an embodiment of the disclosure. FIG. 5B is a cross sectional view of FIG. 5A, which is taken along line A-A' in the bracket illustrated in FIG. 4. FIG. 6A is an exploded perspective view of an electronic device including a ventilation member made of a metal material, which is positioned between a shielding member and a support member according to an embodiment of the disclosure. FIG. 6B is a cross sectional view of FIG. 6A, which is taken along line A-A' in the bracket illustrated in FIG. 4. FIG. 7A is an exploded perspective view of an electronic device including a ventilation member made of a fiber material, which is positioned between a shielding member and a support member according to an embodiment of the disclosure. FIG. 7B is a cross sectional view of FIG. 7A, which is taken along line A-A' in the bracket illustrated in FIG. 4.

According to an embodiment, as illustrated in FIG. 5A and FIG. 5B, an electronic device 200 may include a housing 210, a guide member 3000 (e.g., a waterproof member 300, a support member 310, and/or a shielding member 320), a microphone printed circuit board 510, and/or a microphone module 500. At least one configuration among the configurations described above may be omitted from the electronic device 200, or other configurations may be added to the electronic device.

In an embodiment, the guide member 3000 may include a waterproof member (e.g., a first waterproof film or membrane) 300, a support member 310, and/or a shielding member 320 (e.g., an elastic member or a pressing member). Thereby, the guide member 3000 may maintain waterproofing and provide physical support and acoustic sealing.

In an embodiment, the waterproof member 300 may include a first waterproof member 301 and/or a second waterproof member 302.

In an embodiment, the shielding member 320 may include a first shielding member 321, a second shielding member 322, and/or a third shielding member 323.

In an embodiment, referring to FIG. 5A and FIG. 5B, the housing 210, the waterproof member 300, the support member 310, the ventilation member 600, the microphone printed circuit board 510, and the microphone module 500 may be sequentially arranged in the +x-axis direction in FIG. 5A and FIG. 5B. The microphone printed circuit board 510 may maintain alignment between sound paths and acoustic elements, supporting sound integrity.

In an embodiment, referring to FIG. 5A, the housing 210, the second waterproof member 302, the first waterproof member 301, the first support member 311, the second support member 312, the first shielding member 321, the ventilation member 600, the second shielding member 322, the microphone printed circuit board 510, and the microphone module 500 may be sequentially arranged in the +x-axis direction in FIG. 5A.

In an embodiment, referring to FIG. 5A and FIG. 5B, the ventilation member 600 made of a metal material may be disposed between the microphone printed circuit board 510 and the first shielding member 321.

In an embodiment, referring to FIG. 5A, an adhesive member T (e.g., a double-sided tape or bond) may be attached to one surface of the first waterproof member 301, the first support member 311, and/or the second support member 312.

In an embodiment, referring to FIG. 5A to FIG. 7B, the first shielding member 321 may be formed of an elastic material (e.g., rubber).

In an embodiment, referring to FIG. 5A, the first shielding member 321 may press the ventilation member 600. In an embodiment, referring to FIG. 5A, the first shielding member 321 may press the ventilation member 600 in the +x-axis direction in FIG. 5A. In an embodiment, referring to FIG. 5A, the first shielding member 321 may press the support member 310 and the ventilation member 600.

In an embodiment, referring to FIG. 5A to FIG. 7B, the first shielding member 321 may be formed of a material identical to that of the adhesive member T.

In an embodiment, referring to FIG. 5A to FIG. 7B, the second shielding member 322 may be disposed on one surface of the ventilation member 600.

In an embodiment, referring to FIG. 5A to FIG. 7B, the second shielding member 322 may be formed of a material identical to that of the adhesive member T.

In an embodiment, referring to FIG. 6A and FIG. 6B, the housing 210, the waterproof member 300, the support member 310, the ventilation member 600, the shielding member 320, the microphone printed circuit board 510, and the microphone module 500 may be sequentially arranged in the +x direction in FIG. 6A and FIG. 6B.

In an embodiment, referring to FIG. 6A, the housing 210, the second waterproof member 302, the first waterproof member 301, the support member 310, the ventilation member 600, the second shielding member 322, the first shielding member 321, the microphone printed circuit board 510, and the microphone module 500 may be sequentially arranged in the +x-axis direction in FIG. 6A.

In an embodiment, referring to FIG. 6A and FIG. 6B, the ventilation member 600 made of a metal material may be disposed between the shielding member 320 and the support member 310.

In an embodiment, referring to FIG. 6A, the adhesive member T may be attached to one surface of the first waterproof member 301 and/or the support member 310.

In an embodiment, referring to FIG. 6A to FIG. 7B, the first shielding member 321 may press the ventilation member 600 and the microphone printed circuit board 510. In an embodiment, referring to FIG. 6A to FIG. 7B, the first shielding member 321 may press the microphone printed circuit board 510 in the +x-axis direction in FIG. 6A and FIG. 7A. In an embodiment, referring to FIG. 6A to FIG. 7B, the first shielding member 321 may press the second shielding member 322 and the microphone printed circuit board 510. In an embodiment, referring to FIG. 7A and FIG. 7B, the housing 210, the waterproof member 300, the support member 310, the ventilation member 600, the microphone printed circuit board 510, and the microphone module 500 may be sequentially arranged in the +x-axis direction in FIG. 7A and FIG. 7B.

In an embodiment, referring to FIG. 7A, the housing 210, the second waterproof member 302, the first waterproof member 301, the first support member 311, the second support member 312, the third shielding member 323, the ventilation member 600, the second shielding member 322, the first shielding member 321, the microphone printed circuit board 510, and the microphone module 500 may be sequentially arranged in the +x-axis direction in FIG. 7A.

In an embodiment, referring to FIG. 7A and FIG. 7B, the ventilation member 600 made of a fiber material may be disposed between the shielding member 320 and the support member 310.

In an embodiment, the ventilation member 600 made of a fiber material may be disposed between the microphone printed circuit board 510 and the first shielding member 321.

In an embodiment, referring to FIG. 7A, the adhesive member T (e.g., a double-sided tape or bond) may be attached to one surface of the first waterproof member 301 and/or the first support member 311.

In an embodiment, referring to FIG. 7A and FIG. 7B, the second shielding member 322 may be disposed on one surface of the ventilation member 600. In an embodiment, referring to FIG. 7A and FIG. 7B, the third shielding member 323 may be disposed on the other surface of the ventilation member 600, which is a surface opposite to the one surface.

In an embodiment, referring to FIG. 7A and FIG. 7B, the second shielding member 322 and the third shielding member 323 may be formed of a material equal to that of the adhesive member T.

In an embodiment, referring to FIG. 5A and FIG. 5B, the microphone module 500 may be disposed in the housing 210. In an embodiment, the microphone module 500 may include a microphone hole 500h. In an embodiment, the microphone module 500 may be disposed in the housing so that the microphone hole 500h corresponds to a sound hole formed through the housing 210. In an embodiment, a sound hole 210h may be formed in one side surface (e.g., the side surface 210C in FIG. 3) of the housing 210, which forms the exterior of the electronic device 200. In addition, the sound hole 210h may be formed through various components constituting the electronic device 200. In an embodiment, the microphone module 500 may receive an external sound transmitted through the sound hole 210h, through the microphone hole 500h.

In an embodiment, referring to FIG. 5A and FIG. 5B, the microphone printed circuit board 510 may include a first surface 510a and a second surface 510b opposite to the first surface 510a. In an embodiment, the microphone printed circuit board 510 may be disposed on a bracket (e.g., the bracket 460 in FIG. 4) having at least a part disposed in the housing 210. In an embodiment, the first surface 510a of the microphone printed circuit board 510 may have at least a part disposed on the bracket. In an embodiment, the microphone module 500 may be disposed on the first surface 510a of the microphone printed circuit board 510. In an embodiment, the microphone printed circuit board 510 may be connected to the printed circuit board 480 by means of a separate flexible printed circuit board (FPCB).

In an embodiment, referring to FIG. 5A and FIG. 5B, the microphone printed circuit board 510 may include a first hole 510h. In an embodiment, the first hole 510h may correspond to the sound hole 210h of the housing 210. In an embodiment, the microphone module 500 may be disposed on the microphone printed circuit board 510 so that the microphone hole 500h is connected to the first hole 510h. In an embodiment, the bracket may include a groove in which the microphone module 500 is accommodated. The microphone module 500 may be disposed on the first surface 510a of the microphone printed circuit board 510 and thus be accommodated in the groove of the bracket.

According to an embodiment, as illustrated in FIG. 5A and FIG. 5B, sounds outside the electronic device 200 may be received through the microphone hole 500h of the microphone module 500, via the sound hole 210h - a first space 1000h (e.g., a sound space or a sound conduit) formed by mechanical members arranged in the housing 210) - the first hole 510h of the microphone printed circuit board 510. In an embodiment, the first space 1000h may be a space formed through the guide member 3000 disposed between the second surface 510b of the microphone printed circuit board 510 and one surface of the housing 210, in which the sound hole 210h is formed. In an embodiment, when the second surface 510b of the microphone printed circuit board 510 is viewed vertically (e.g., in the x-axis direction in FIG. 5A and FIG. 5B), the first space 1000h may be a hole or opening of the guide member 3000, which corresponds to the first hole 510h of the microphone printed circuit board 510. The guide member 3000 and ventilation member 600 may be arranged differently relative to the microphone printed circuit board 510, depending on the layout constraints. In some embodiments, the guide member 3000 may be formed integrally with the microphone printed circuit board 510, or the ventilation member 600 may be placed between the microphone printed circuit board 510 and housing 210 instead.

In an embodiment, referring to FIG. 5A and FIG. 5B, the guide member 3000 may include the waterproof member 300 which is disposed in the housing 210 and covers the sound hole 210h, the support member 310 which is disposed between the waterproof member 300 and the microphone printed circuit board 510 and supports the waterproof member 300, and a shielding member 320 which is disposed between the support member 310 and the microphone printed circuit board 510 and is in close contact with the support member 310 and the microphone printed circuit board 510. In an embodiment, the shielding member 320 may include the first shielding member 321 which is disposed between the support member 310 and the ventilation member 600 and is in close contact with the support member 310 and the ventilation member 600, and the second shielding member 322 which is disposed between the ventilation member 600 and the microphone printed circuit board 510 and is in close contact with the ventilation member 600 and the microphone printed circuit board 510. At least one configuration among the configurations described above may be omitted from the guide member 3000, or other configurations may be added to the guide member.

In an embodiment, referring to FIG. 5A and FIG. 5B, the support member 310 and the shielding member 320 may include holes (e.g., the second hole 310h and the third hole 320h) corresponding to the sound hole 210h and the first hole 510h of the microphone printed circuit board 510. In an embodiment, the second hole 310h formed in the support member 310 and the third hole 320h formed in the shielding member 320 may constitute a part of the first space 1000h.

In an embodiment, referring to FIG. 5A to FIG. 7B, the second hole 310h may include a (2-1)th hole 311h formed through the first support member 311 and a (2-2)th hole 312h formed through the second support member 312. In an embodiment, the third hole 320h may include a (3-1)th hole 321h formed through the first shielding member 321, a (3-2)th hole 322h formed through the second shielding member 322, and a (3-3)th hole 323h formed through the third shielding member 323. In an embodiment, the (2-1)th hole 311h formed in the first support member 311, the (2-2)th hole 312h formed in the second support member 312, the (3-1)th hole 321h formed in the first shielding member 321, the (3-2)th hole 322h formed in the second shielding member 322, and the (3-3)th hole 323h formed in the third shielding member 323 may constitute a part of the first space 1000h.

In an embodiment, a "sound space" may mean a passage for guiding the transmission of sound (a sound wave or acoustic sound). For example, a sound conduit or a sound space may mean a physical space. The sound conduit or the sound space may include a space filled with a medium (e.g., air or fluid) capable of transmitting a sound wave. Hereinafter, that sound is transmitted through a sound space (e.g., the first space 1000h) may mean that sound is transmitted via a specific space.

In an embodiment, referring to FIG. 5A and FIG. 5B, the housing 210 may have the waterproof member 300 disposed therein, which covers the sound hole 210h to prevent external foreign substances (e.g., moisture and dust) from being introduced through the sound hole 210h. In an embodiment, sounds outside the electronic device 200 may be transmitted to the waterproof member 300 through the sound hole 210h, and as the waterproof member 300 vibrates, the external sounds may be received by the microphone module 500 disposed in the electronic device 200.

In an embodiment, the waterproof member 300 may include a porous membrane having uniform air permeability (e.g., fluid permeability) or a non-porous membrane having no air permeability. The waterproof member 300 made of a non-porous membrane may have air permeability lower than the waterproof member 300 made of a porous membrane. The waterproof member 300 made of a non-porous membrane may have very small air permeability.

In an embodiment, referring to FIG. 5A and FIG. 5B, the waterproof member 300 may be disposed between the housing 210 and the second surface 510b of the microphone printed circuit board 510. In an embodiment, the waterproof member 300 may shield the sound hole 210h of the housing 210. In an embodiment, the waterproof member 300 may provide a waterproof function for the microphone module 500. In an embodiment, the waterproof member 300 may be formed of a thread, a bond seal, and/or a packing.

In an embodiment, referring to FIG. 5A and FIG. 5B, the guide member 3000 may include the support member 310. In an embodiment, the support member 310 may be disposed between the waterproof member 300 and the microphone printed circuit board 510 and on one surface of the waterproof member 300. In an embodiment, the support member 310 may support the waterproof member 300.

In an embodiment, referring to FIG. 5A and FIG. 5B, the support member 310 may include the second hole 310h.

In an embodiment, referring to FIG. 5A and FIG. 5B, the second hole 310h may correspond to the sound hole 210h of the housing 210.

In an embodiment, referring to FIG. 5A and FIG. 5B, the second hole 310h may be connected to the microphone hole 500h of the microphone module 500 and the first hole 510h of the microphone printed circuit board 510. In an embodiment, the second hole 310h may be connected to at least parts of the shielding member 320 and the ventilation member 600. In an embodiment, the support member 310 may have a uniform air ventilation amount due to the second hole 310h. The support member 310 may be present even without a waterproof member 300, and vice versa. The second hole 310h may be aligned with either the sound hole 210h or the microphone hole 500h independently.

In an embodiment, referring to FIG. 5A and FIG. 5B, the support member 310 may include the first support member 311 and the second support member 312. In an embodiment, the first support member 311 may be formed of a porous material (e.g., PET) and may include the (2-1)th hole 311h. In an embodiment, the second support member 312 may be formed of a metal (e.g., stainless steel, aluminum alloy, and/or carbon steel) material and may include the (2-2)th hole 312h. In an embodiment, referring to FIG. 5A and FIG. 5B, the waterproof member 300, the first support member 311, and the second support member 312 may be sequentially arranged in the +x-axis direction in FIG. 5A and FIG. 5B. In another embodiment, the waterproof member 300, the second support member 312, and the first support member 311 may be sequentially arranged in the +x-axis direction.

In an embodiment, as illustrated in FIG. 5A and FIG. 5B, the first shielding member 321 may be disposed between the support member 310 and the microphone printed circuit board 510 and may be in close contact with the support member 310 and the microphone printed circuit board 510. In an embodiment, the first shielding member 321 may prevent foreign substances or moisture introduced through the sound hole 210h from being introduced into the second space 1000H of the housing. The second space 1000H may be an outer space of the guide member 3000 and may be an inner space of the housing 210. In an embodiment, the second space 1000H may be the remaining space except for the first space 1000h in the inner space of the housing 210, the first space being formed by the guide member 3000. In an embodiment, the first shielding member 321 may shield an external sound output from a speaker module disposed in the second space 1000H from entering the inside of the microphone module 500. In an embodiment, the first shielding member 321 may be formed of an elastic material (e.g., rubber) or a double-sided tape.

In an embodiment, referring to FIG. 5A and FIG. 5B, the first shielding member 321 may include the third hole 321h.

In an embodiment, referring to FIG. 5A and FIG. 5B, the third hole 321h may correspond to the sound hole 210h of the housing 210.

In an embodiment, referring to FIG. 5A and FIG. 5B, the third hole 321h may be connected to the microphone hole 500h of the microphone module 500, the first hole 510h of the microphone printed circuit board 510, and the second hole 310h of the support member 310. In an embodiment, the third hole 321h may be connected to at least a part of the ventilation member 600.

In an embodiment, referring to FIG. 5A and FIG. 5B, the microphone hole 500h, the first hole 510h, the second hole 310h, the third hole 320h, and/or an inlet 600h may allow a fluid to communicate with the first space 1000h.

In an embodiment, referring to FIG. 5A and FIG. 5B, the ventilation member 600 may be disposed between the first shielding member 321 and the microphone printed circuit board 510 and on one surface of the first shielding member 321 and/or the second surface 510b of the microphone printed circuit board 510.

In an embodiment, as illustrated in FIG. 6A to FIG. 6C, the ventilation member 600 may be disposed between the support member 310 and the first shielding member 321 and on one surface of the support member 310.

In an embodiment, the ventilation member 600 may be disposed between the first support member 311 and the second support member 312 and on the first support member 311. In an embodiment, the housing 210, the waterproof member 300, the first support member 311, the ventilation member 600, the second support member 312, the first shielding member 321, the microphone printed circuit board 510, and the microphone module 500 may be sequentially arranged in the +x-axis direction.

In an embodiment, as described above, the guide member 3000 may include the first space 1000h (e.g., an opening or a hole) for connecting the sound hole 210h and the first hole 510h of the microphone printed circuit board 510. Meanwhile, changes in air pressure may occur in the first space 1000h due to the assembly of the electronic device and changes in temperature inside the electronic device. In this case, imbalance in the flatness of the waterproof member 300 may occur. The imbalance in the flatness of the waterproof member 300 may cause a change in microphone sound quality. According to an embodiment of the disclosure, the electronic device 200 may be configured such that air pressure balance between the first space 1000h of the guide member 3000 and the second space 1000H outside the guide member 3000 is achieved through the ventilation member 600. For example, since the first space 1000h has a volume smaller than the second space 1000H, the first space may have a relatively higher pressure than the second space 1000H. Therefore, the flow of air (e.g., fluid) from the first space 1000h to the second space 1000H may be induced through the ventilation member. Additionally, guiding the fluid from the second space 1000H to the first space 1000h through the ventilation member 600 may gradually reduce energy, thereby decreasing echo phenomenon.

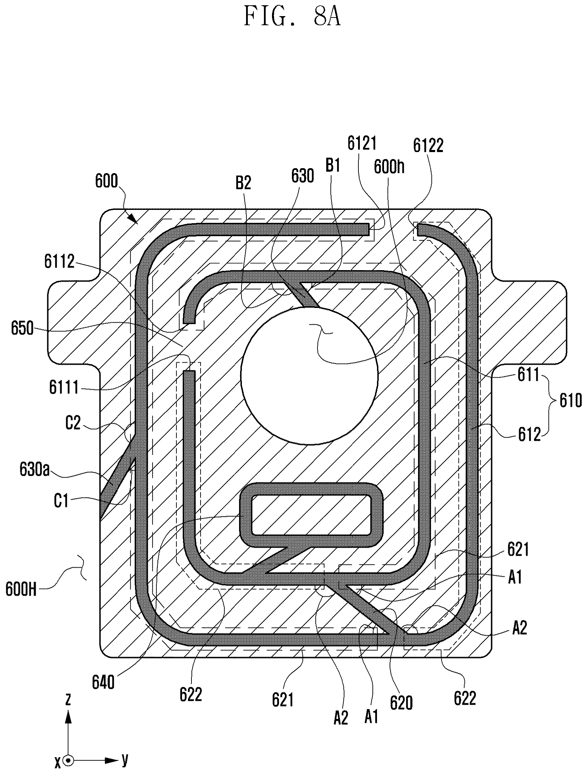

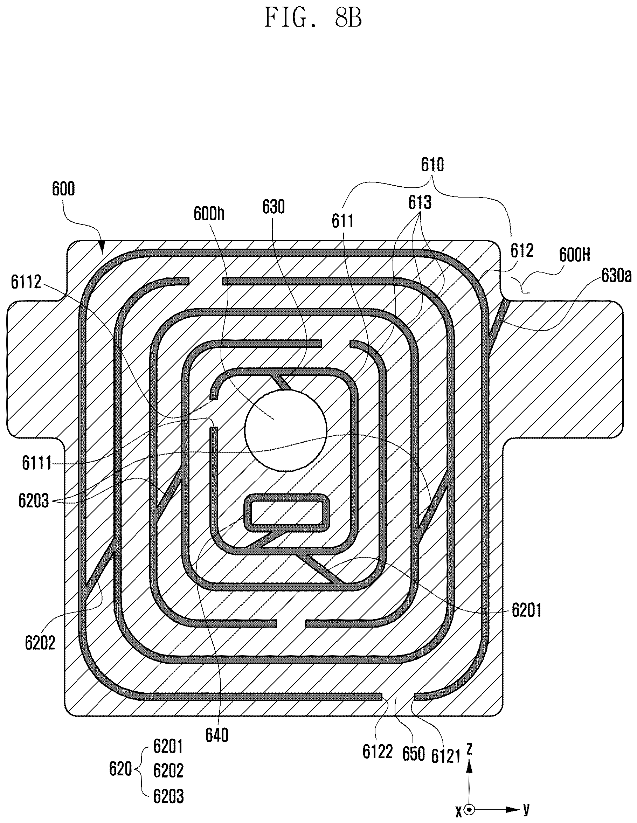

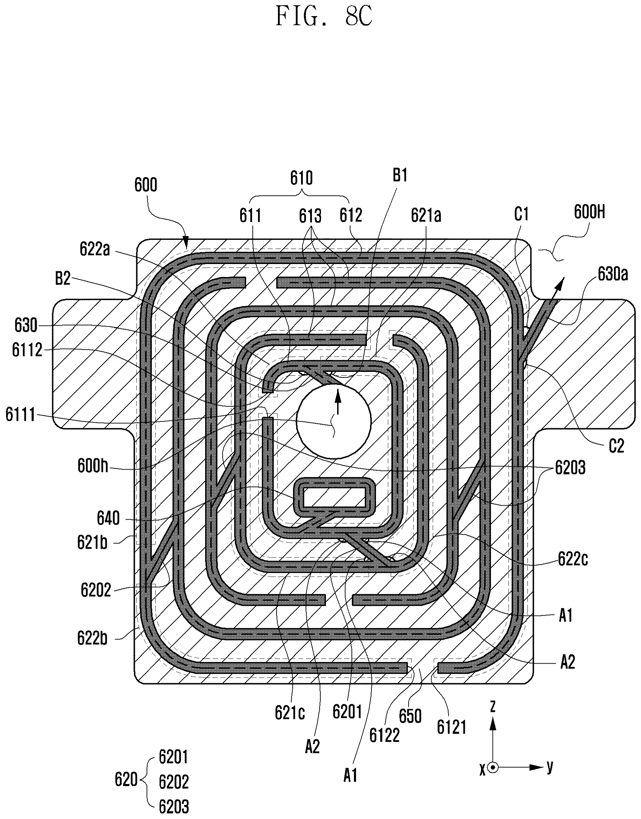

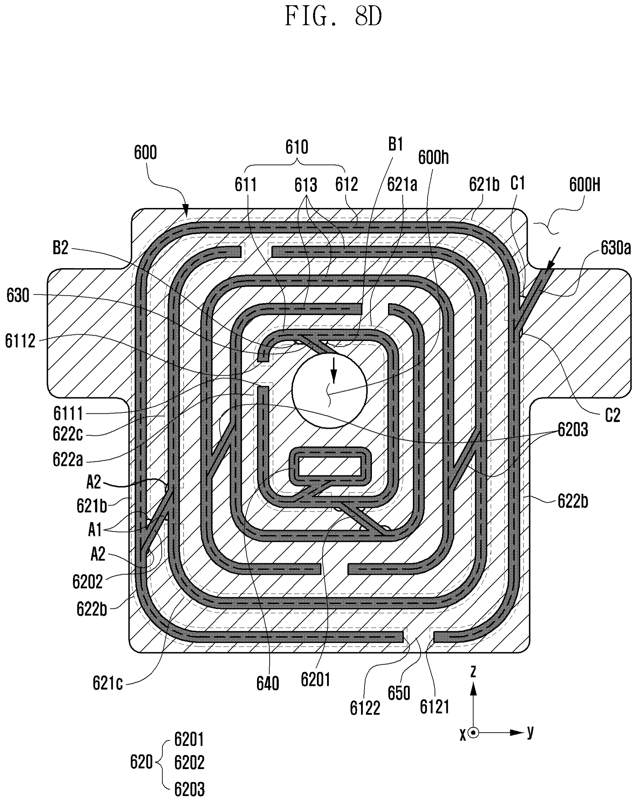

FIG. 8A is a plan view of a ventilation member 600 in FIG. 5A, which includes two conduits. FIG. 8A is a view showing a first passage 621 and a second passage 622 with reference to a connection conduit 620 for connecting a first conduit 611 and a second conduit 612. FIG. 8B is a plan view of a ventilation member 600 in FIG. 5A, which includes multiple conduits 610. FIG. 8C is a plan view of a ventilation member 600 in FIG. 5A, which includes multiple conduits 610 through which the air having been introduced into an inlet 600h moves to an outlet 600H. FIG. 8D is a plan view of a ventilation member 600 in FIG. 5A, which includes multiple conduits 610 through which the air having been introduced into an outlet 600H moves to an inlet 600h. The third conduit 613 in FIG. 8B to FIG. 8D may be omitted, and one third conduit or multiple third conduits may be provided.

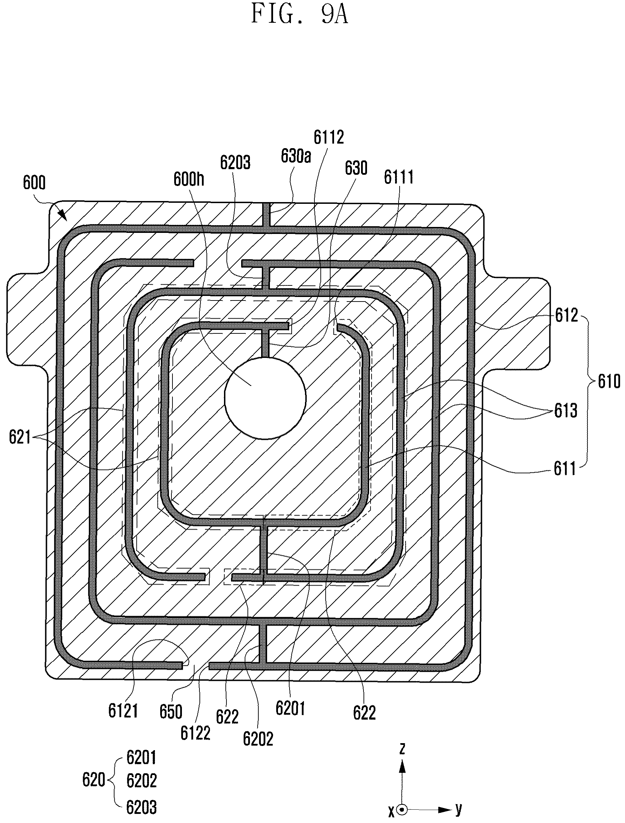

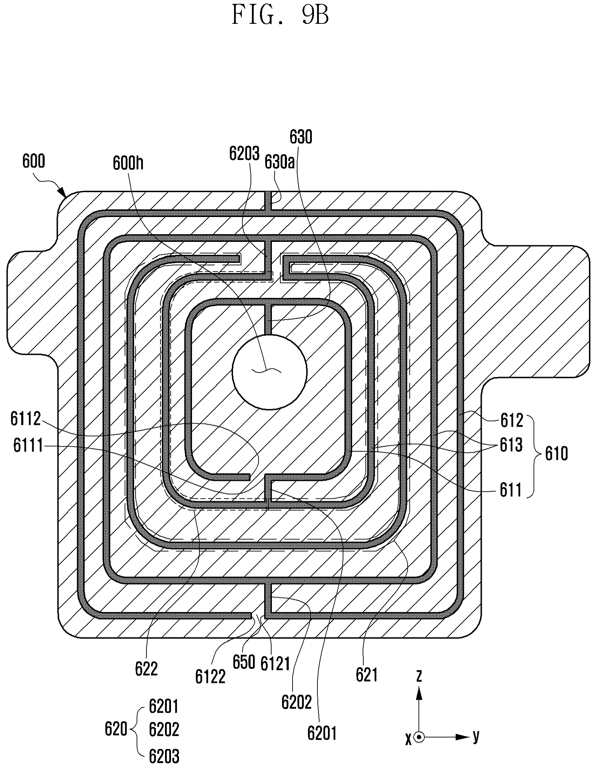

FIG. 9A and FIG. 9B are plan views of a ventilation member 600 in FIG. 5A, in which the angle formed by the connection conduit 620 and a first passage 612 is equal to the angle formed by the connection conduit and a second passage 622 according to an embodiment of the disclosure. FIG. 9A and FIG. 9B are views showing a first passage 621 and a second passage 622 with reference to a connection conduit 620 for connecting a first conduit 611 and a second conduit 612 according to an embodiment of the disclosure. The third conduit 613 in FIG. 9A and 9B may be omitted, and one third conduit or multiple third conduits may be provided.

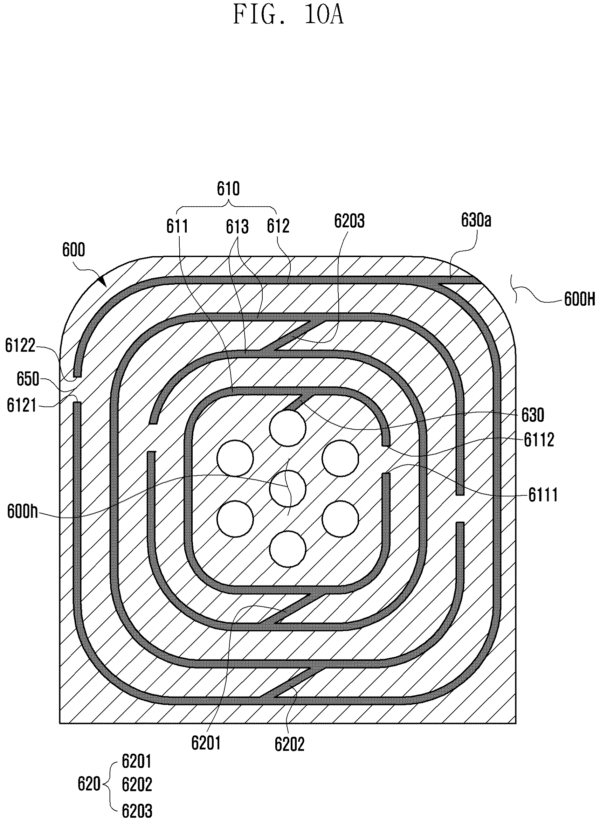

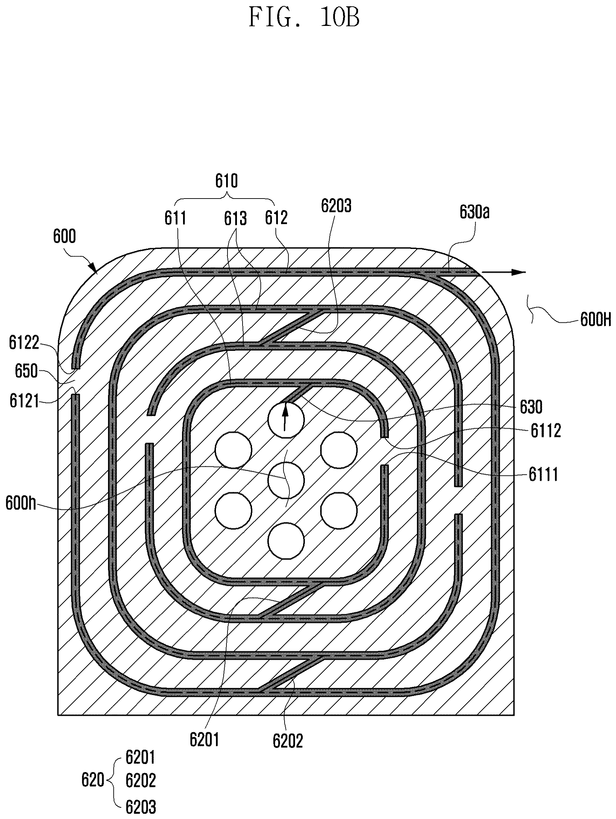

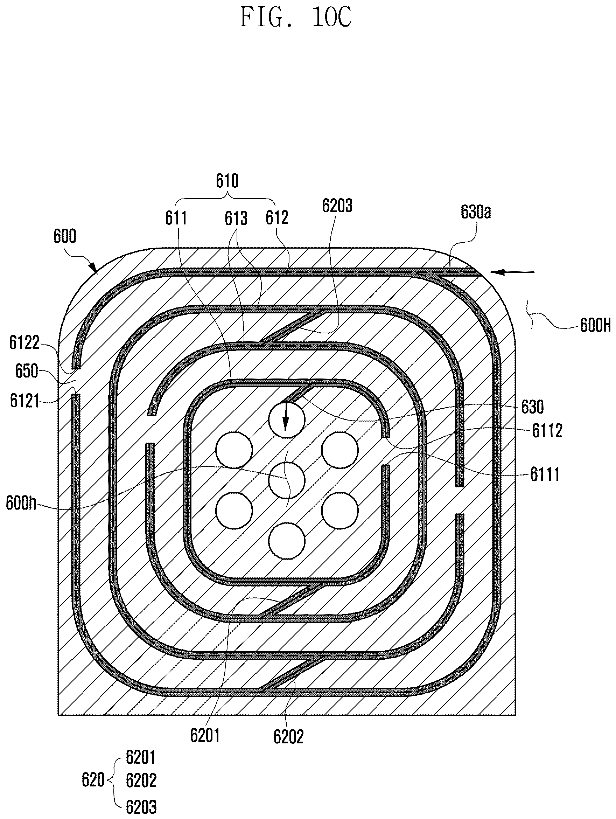

FIG. 10A is a plan view of a ventilation member 600 in FIG. 6A, which includes multiple conduits 610. FIG. 10B is a plan view of a ventilation member 600 in FIG. 6A, which includes multiple conduits 610 through which air (e.g., fluid) introduced into an inlet 600h moves to an outlet 600H. FIG. 10C is a plan view of a ventilation member 600 of FIG. 6A, which includes multiple conduits 610 through which the air having been introduced into an outlet 600H moves to an inlet 600h. The inlet 600h connected to the terminal ends of the first conduit 611 may provide controlled exposure to external air, *allowing stabilization of internal pressure conditions and* supporting acoustic isolation.

In an embodiment, as illustrated in FIG. 8A to FIG. 10C, the ventilation member 600 may include conduits 610, a partition wall part 650, an inlet 600h, and an outlet 600H.

In an embodiment, referring to FIGS. 5A and 5B, the inlet 600h may correspond to the sound hole 210h of the housing 210. In an embodiment, the inlet 600h may be connected to the microphone hole 500h of the microphone module 500, the first hole 510h of the microphone printed circuit board 510, the second hole 310h of the support member 310, and the third hole 321h of the first shielding member 321. In an embodiment, the outlet 600H may be connected to the second space 1000H which is the outer space of the housing 210.

In an embodiment, referring to FIG. 8A to FIG. 10C, the inlet 600h and the outlet 600H may be connected through the multiple conduits 610. In an embodiment, air in the inlet 600h may move to the outlet 600H through the conduits 610. In an embodiment, air in the outlet 600H may move to the inlet 600h through the conduits 610. The outlet 600H may *be connected to external air through the second conduit 612 to relieve internal pressure, and may stabilize the internal pressure of the electronic device by balancing the intake and discharge of air.*

In an embodiment, referring to FIG. 8A to FIG. 10C, at least one of multiple conduits 610 may be segmented by a partition wall part 650. In an embodiment, at least one of the multiple conduits 610 may be formed in a discontinuous loop shape segmented by the partition wall part 650. The inclusion of the partition wall part 650 may segment the conduits to form discontinuous loops, helping interrupt direct sound transmission paths, thereby minimizing the risk of echo or acoustic feedback.

In an embodiment, referring to FIG. 8A to FIG. 10C, the air having been introduced into the inlet 600h or the outlet 600H may be blocked by the partition wall part 650. Thereby, it may enable echo suppression by physically limiting sound reentry.

In an embodiment, referring to FIG. 8A to FIG. 10C, the conduits 610 may include a first conduit 611, a second conduit 612, third conduits 613, a connection conduit 620, a first path part 630, a second path part 630a, a closed-loop-shaped conduit 640, and the partition wall part 650.

In an embodiment, referring to FIG. 8A, the multiple conduits 610 may be formed to have different circumferences. In an embodiment, the multiple conduits 610 may include the first conduit 611 and the second conduit 612.

In an embodiment, referring to FIG. 8A to FIG. 10C, each of the multiple conduits 610 may include a terminal end part (e.g., a cut part, a closed part, or a terminal end). In an embodiment, the terminal end part of each of the multiple conduits 610 may be formed by the partition wall part 650.

In an embodiment, referring to FIG. 8A to FIG. 10C, the first conduit 611 may include a (1-1)th terminal end part 6111 (e.g., a (1-1)th cut part, a (1-1)th closed part, or a (1-1)th terminal end part) and a (1-2)th terminal end part 6112 (e.g., a (1-2)th cut part, a (1-2)th closed part, or a (1-2)th terminal end part).

In an embodiment, the (1-1)th terminal end part 6111 and the (1-2)th terminal end part 6112 may be positioned at the terminal ends of the first conduit 611. In an embodiment, the (1-1)th terminal end part 6111 may mean one among the terminal ends of the first conduit 611. In an embodiment, the (1-2)th terminal end part 6112 may mean one among the terminal ends of the first conduit 611. In an embodiment, the positions of the (1-1)th terminal end part 6111 and the (1-2)th terminal end part 6112 may be swapped with each other.

In an embodiment, referring to FIG. 8A to FIG. 10C, the partition wall part 650 may be disposed between the (1-1)th terminal end part 6111 and the (1-2)th terminal end part 6112 of the first conduit 611. In an embodiment, the first conduit 611 may be segmented by the partition wall part 650.

In an embodiment, referring to FIG. 8A to FIG. 10C, the second conduit 612 may include a (2-1)th terminal end part 6121 (e.g., a (2-1)th cut part, a (2-1)th closed part, or a (2-1)th terminal end part) and a (2-2)th terminal end part 6122 (e.g., a (2-2)th cut part, a (2-2)th closed part, or a (2-2)th terminal end part).

In an embodiment, the (2-1)th terminal end part 6121 and the (2-2)th terminal end part 6122 may be positioned at the terminal ends of the second conduit 612. In an embodiment, the (2-1)th terminal end part 6121 may mean one among the terminal ends of the second conduit 612. In an embodiment, the (2-2)th terminal end part 6122 may mean one among the terminal ends of the second conduit 612. In an embodiment, the positions of the (2-1)th terminal end part 6121 and the (2-2)th terminal end part 6122 may be swapped with each other.

In an embodiment, referring to FIG. 8A to FIG. 10C, the partition wall part 650 may be disposed between the (2-1)th terminal end part 6121 and the (2-2)th terminal end part 6122 of the second conduit 612. In an embodiment, the second conduit 612 may be segmented by the partition wall part 650. The first conduit 611 and second conduit 612 with respective terminal ends and their connections to the inlet and outlet may allow controlled airflow, contributing to stable air pressure balance inside the electronic device.

In an embodiment, referring to FIG. 8B to FIG. 10C, the ventilation member 600 may include multiple third conduits 613.

In an embodiment, referring to FIG. 8B to FIG. 10C, each of the third conduits 613 may include a (3-1)th terminal end part (not shown) (e.g., a (3-1)th cut part, a (3-1)th closed part, or a (3-1)th terminal end part) and a (3-2)th terminal end part (not shown) (e.g., a (3-2)th cut part, a (3-2)th closed part, or a (3-2)th terminal end part).

In an embodiment, the (3-1)th terminal end part (not shown) and the (3-2)th terminal end part (not shown) may be positioned at the terminal ends of each of the third conduits 613. In an embodiment, the (3-1)th terminal end part (not shown) may mean one among the terminal ends of each of the third conduits 613. In an embodiment, the (3-2)th terminal end part (not shown) may mean one among the terminal ends of each of the third conduits 613.

In an embodiment, referring to FIG. 8B to FIG. 10C, the partition wall part 650 may be disposed between the (3-1)th terminal end part (not shown) and the (3-2)th terminal end part (not shown) of each of the third conduits 613. In an embodiment, the third conduits 613 may be segmented by the partition wall part 650.

In an embodiment, the first conduit 611 may be connected to the inlet 600h. In an embodiment, the inlet 600h may be connected to the first conduit 611 extending from the (1-1)th terminal end part 6111 and the (1-2)th terminal end part 6112.

In an embodiment, the inlet 600h may allow a fluid to communicate with the first space 1000h. In an embodiment, the inlet 600h may allow a fluid to communicate with the microphone hole 500h, the first hole 510h, the second hole 310h, and the third hole 320h.

In an embodiment, the second conduit 612 may be connected to the outlet 600H. In an embodiment, the outlet 600H may be connected to the second conduit 612 extending from the (2-1)th terminal end part 6121 and the (2-2)th terminal end part 6122.

In an embodiment, the outlet 600H may allow a fluid to communicate with the second space 1000h. In an embodiment, the outlet 600H may allow a fluid to communicate with the sound hole 210h.

In an embodiment, at least one of the multiple conduits 610 may be formed in a discontinuous loop shape segmented by the partition wall part 650. In an embodiment, the first conduit 611, the second conduit 612, and/or the third conduit 613 may be formed in a discontinuous loop shape segmented by the partition wall part 650.

In an embodiment, referring to FIG. 8A to FIG. 10C, the second conduit 612 may be formed in a shape surrounding the first conduit 611 from the outside of the first conduit 611. In an embodiment, the second conduit 612 may be formed to have a circumference greater than the circumference of the first conduit 611. In particular, a second conduit 612 having a greater circumference than the first conduit 611 may allow pressure changes to be moderated, aiding in reducing internal acoustic noise or vibration propagation.

In an embodiment, referring to FIG. 8B to FIG. 10C, the second conduit 612 may be formed in a shape surrounding the third conduit 613 from the outside of the third conduit 613. In an embodiment, the second conduit 612 may be formed to have a circumference greater than the circumference of the third conduit 613. The hierarchical conduit configuration, with increasing circumferences, may enable staged fluid flow control, which may help in gradual pressure equalization and acoustic smoothing.

In an embodiment, referring to FIG. 8B to FIG. 10C, the third conduit 613 may be formed in a shape surrounding the first conduit 611 from the outside of the first conduit 611. In an embodiment, the third conduit 613 may be formed to have a circumference greater than the circumference of the first conduit 611.

In an embodiment, referring to FIG. 8B to FIG. 10C, the second conduit 612 may be formed in a shape surrounding the third conduit 613, and the third conduit 613 may be formed in a shape surrounding the first conduit 611. In an embodiment, the second conduit 612 may be formed to have a circumference greater than the circumference of the third conduit 613, and the third conduit 613 may be formed to have a circumference greater than the circumference of the first conduit 611.

In an embodiment, referring to FIG. 8A to FIG. 10C, at least one connection conduit 620 may connect the multiple conduits 610. In an embodiment, at least one connection conduit 620 may connect the first conduit 611 and the second conduit 612. The connection conduit 620 may facilitate fluid communication between the first conduit 611 and second conduit 612 to promote looped pressure equalization. However, in configurations where only one conduit is employed, or where independent airflow paths are used, the connection conduit 620 may be omitted without impairing pressure balancing functionality.

In an embodiment, referring to FIG. 8A to FIG. 10C, the ventilation member 600 may include the first path part 630 and the second path part 630a.

In an embodiment, referring to FIG. 8A to FIG. 10C, the first path part 630 may extend from the first conduit 611 to connect the inlet 600h and the first conduit 611. In an embodiment, the second path part 630a may extend from the second conduit 612 to connect the outlet 600H and the second conduit 612.

In an embodiment, referring to FIG. 8B and FIG. 10C, the connection conduit 620 may include a first connection conduit 6201, a second connection conduit 6202, and a third connection conduit 6203.

In an embodiment, referring to FIG. 8B to FIG. 10C, at least one connection conduit 620 may connect the first conduit 611, the third conduit 613, and the second conduit 612.

In an embodiment, the first conduit 611 and the third conduit 613 may be connected through the first connection conduit 6201. In an embodiment, the first connection conduit 6201 may connect the first conduit 611 and the third conduit 613.

In an embodiment, the multiple third conduits 613 may be connected to each other through the third connection conduit 6203.

In an embodiment, the third conduits 613 and the second conduit 612 may be connected through a second connection conduit 6202. In an embodiment, the second connection conduit 6202 may connect the third conduits 613 and the second conduit 612.

In an embodiment, referring to FIG. 8A to FIG. 10C, the inlet 600h and the outlet 600H may be connected through the multiple conduits 610, the connection conduit 620, the first path part 630, and the second path part 630a.

In an embodiment, referring to FIG. 8A to FIG. 10C, air in the inlet 600h may move to the outlet 600H through the multiple conduits 610, the connection conduit 620, the first path part 630, and the second path part 630a. In an embodiment, air in the outlet 600H may move to the inlet 600h through the multiple conduits 610, the connection conduit 620, the first path part 630, and the second path part 630a.

In an embodiment, referring to FIG. 8B to FIG. 10C, air in the inlet 600h may sequentially pass through the first path part 630, the first conduit 611, the connection conduit 620, the second conduit 612, and the second path part 630a and then move to the outlet 600H. In an embodiment, air in the outlet 600H may sequentially pass through the second path part 630a, the second conduit 612, the connection conduit 620, the first conduit 611, and the first path part 630 and then move to the inlet 600h.

In an embodiment, referring to FIG. 8B to FIG. 10C, air in the inlet 600h may sequentially pass through the first path part 630, the first conduit 611, the first connection conduit 6201, the third conduit 613, the second connection conduit 6202, the second conduit 612, and the second path part 630a and then move to the outlet 600H. In an embodiment, air in the outlet 600H may sequentially pass through the second path part 630a, the second conduit 612, the second connection conduit 6202, the third conduit 613, the first connection conduit 6201, the first conduit 611, and the first path part 630 and then move to the inlet 600h.

In an embodiment, referring to FIG. 8A to FIG. 10C, each of the conduits 610 having discontinuous loop shapes segmented by the partition wall part 650 may be branched into a first passage 621 and a second passage 622 with reference to the connection conduit 620. In an embodiment, the second passage 622 may be shorter than the first passage 621. An angle formed between the connection conduit 620 and shorter passages may enable directional airflow control, reducing airspeed at junctions, and improving flow stability and noise dampening. The partition wall part 650 may be used to segment either the first conduit 611 or second conduit 612 alone. The discontinuous loop shape may arise naturally from a segmented conduit or may be formed structurally even in the absence of a partition wall part 650. The first conduit 611 may be branched into one or more passages even in the absence of a second conduit. The angle relationship may be defined only for one conduit, and may also be symmetrical in other implementations.

In an embodiment, referring to FIG. 8B to FIG. 10C, each of the first conduit 611 and the third conduit 613 may be branched into the first passage 621 and the second passage 622 with reference to the first connection conduit 6201. In an embodiment, each of the third conduit 613 and the second conduit 612 may be branched into the first passage 621 and the second passage 622 with reference to the second connection conduit 6202. In an embodiment, the second passage 622 may be shorter than the first passage 621.

In an embodiment, referring to FIG. 8A, the angle A1 formed by the connection conduit 620 and the first passage 621 may be smaller than the angle A2 formed by the connection conduit 620 and the second passage 622.

In an embodiment, referring to FIG. 8A to FIG. 10C, the partition wall part 650 may be disposed at the ends of the first passage 621 and the second passage 622.

In an embodiment, referring to FIG. 8A to FIG. 10C, each of the conduits 610 having discontinuous loop shapes segmented by the partition wall part 650 may be branched into the first passage 621 and the second passage 622 with reference to the first path part 630 and the second path part 630a. In an embodiment, the second passage 622 may be shorter than the first passage 621.

In an embodiment, referring to FIG. 8A, the angle B1 formed by the first path part 630 and the first passage 621 may be smaller than the angle B2 formed by the first path part 630 and the second passage 622.

In an embodiment, referring to FIG. 8A, the angle C1 formed by the second path part 630a and the first passage 621 may be smaller than the angle C2 formed by the second path part 630a and the second passage 622.

In an embodiment, referring to FIG. 8A to FIG. 10C, the air having been introduced into the inlet 600h or the outlet 600H may move through the conduits 610. In an embodiment, the energy of air having been introduced through the inlet 600h or the outlet 600H may be reduced as the air moves through the conduits 610.

In an embodiment, referring to FIG. 8A to FIG. 10C, the air flow moving through the conduits 610 may be blocked by the terminal end parts (e.g., the (1-1)th terminal end part 6111, the (1-2)th terminal end part 6112, the (2-1)th terminal end part 6121, the (2-2)th terminal end part 6122, the (3-1)th terminal end part (not shown), or the (3-2)th terminal end part (not shown)) thereof. In an embodiment, in case that the air flow moving through the conduits 610 is blocked by the terminal end parts thereof and thus the air moves in a direction opposite to the existing direction in which air flows, the energy of the air may be reduced.

In an embodiment, referring to FIG. 8A to FIG. 10C, the air flow moving through the conduits 610 may be blocked by the partition wall part 650 between the (1-1)th terminal end part 6111 and the (1-2)th terminal end part 6112. In an embodiment, the air flow moving through the conduits 610 may be blocked by the partition wall part 650 between the (2-1)th terminal end part 6121 and the (2-2)th terminal end part 6122. In an embodiment, the air flow moving through the conduits 610 may be blocked by the partition wall part 650 between the (3-1)th terminal end part (not shown) and the (3-2)th terminal end part (not shown). In an embodiment, in case that the air flow moving through the conduits 610 is blocked by the partition wall part 650 and thus the air moves in a direction opposite to the existing direction in which air flows, the energy of the air may be reduced.

In an embodiment, referring to FIG. 8A to FIG. 8D, the energy of the air having been introduced into the inlet 600h or outlet 600H may be reduced as the air moves through the closed-loop-shaped conduit 640.

In an embodiment, as illustrated in FIG. 8A, the air having been introduced into the inlet 600h may pass through the first path part 630 and then move to the second passage 622 of the first conduit 611, which forms a large angle with the first path part 630. In an embodiment, the air having moved to the second passage 622 of the first conduit 611 may be reflected by the partition wall part 650 and then be directed to the first passage 621 of the first conduit 611. In this case, the air directed to the first passage 621 of the first conduit 611 may be in a state of having relatively low energy due to the partition wall part 650. In an embodiment, the connection conduit 620 from which the first passage 621 and the second passage 622 of the second conduit 612 are branched may be connected to the first passage 621 of the first conduit 611. In an embodiment, the air having been introduced into the first conduit 611 may pass through the connection conduit 620 and then move to the second passage 622 of the second conduit 612, which forms a large angle with the connection conduit 620. In an embodiment, the air having moved to the second passage 622 of the second conduit 612 may be reflected by the partition wall part 650 and then be directed to the first passage 621 of the second conduit 612. In this case, the air directed to the first passage 621 of the second conduit 612 may be in a state of having relatively low energy due to the partition wall part 650. In an embodiment, the air having been introduced into the second conduit 612 may pass through the second path part 630a and be discharged to the outlet 600H. In an embodiment, the outlet 600H may be connected to the second space 1000H which is the outer space of the housing 210.

In an embodiment, as illustrated in FIG. 8A, the air having been introduced into the inlet 600h may pass through the first path part 630 and then preferentially move to the second passage 622 of the first conduit 611, which forms a large angle with the first path part 630. In an embodiment, the air having moved to the second passage 622 of the first conduit 611 may be reflected by the (1-2)th terminal end part 6112 and then be directed to the first passage 621 of the first conduit 611. In this case, the air directed to the second passage 622 of the first conduit 611 may be directed to the first passage 621 of the first conduit 611 in a state of having relatively low energy due to the (1-2)th terminal end part 6112. In an embodiment, the connection conduit 620 from which the first passage 621 and the second passage 622 of the second conduit 612 are branched may be disposed in the first passage 621 of the first conduit 611. In an embodiment, the air having moved to the first passage 621 of the first conduit 611 may be reflected by the (1-1)th terminal end part 6111 and then be directed to the second passage 622 of the first conduit 611 or the connection conduit 620. In this case, the air directed to the first passage 621 of the first conduit 611 may be directed to the second passage 622 of the first conduit 611 or the connection conduit 620 in a state of having relatively low energy due to the (1-1)th terminal end part 6111. In an embodiment, the air having been introduced into the first conduit 611 may pass through the connection conduit 620 and then preferentially move to the second passage 622 of the second conduit 612, which forms a large angle with the connection conduit 620. In an embodiment, the air having moved to the second passage 622 of the second conduit 612 may be reflected by the (2-2)th terminal end part 6122 and then be directed to the first passage 621 of the second conduit 612. In this case, the air directed to the second passage 622 of the second conduit 612 may be directed to the first passage 621 of the second conduit 612 in a state of having relatively low energy due to the (2-2)th terminal end part 6122. In an embodiment, the second path part 630a connected to the outlet 600H may be disposed in the first passage 621 of the second conduit 612. In an embodiment, the air having moved to the first passage 621 of the second conduit 612 may be reflected by the (2-1)th terminal end part 6121 and then be directed to the second passage 622 of the second conduit 612 or the second path part 630a. In this case, the air directed to the first passage 621 of the second conduit 612 may be directed to the second passage 622 of the second conduit 612 or the second path part 630a in a state of having relatively low energy due to the (2-1)th terminal end part 6121. In an embodiment, the air having been introduced into the second conduit 612 may pass through the second path part 630a and may be discharged to the outlet 600H. In an embodiment, the outlet 600H may be connected to the second space 1000H which is the outer space of the housing 210.

In an embodiment, as illustrated in FIG. 8A, the air having been introduced into the outlet 600H may pass through the second path part 630a and then move to the second passage 622 of the second conduit 612, which forms a large angle with the second path part 630a. In an embodiment, the air having moved to the second passage 622 of the second conduit 612 may be reflected by the partition wall part 650 and then be directed to the first passage 621 of the second conduit 612. In this case, the air directed to the first passage 621 of the second conduit 612 may be in a state of having relatively low energy due to the partition wall part 650. In an embodiment, the connection conduit 620 from which the first passage 621 and the second passage 622 of the first conduit 611 are branched may be connected to the first passage 621 of the second conduit 612. In an embodiment, the air having been introduced into the second conduit 612 may pass through the connection conduit 620 and then move to the second passage 622 of the first conduit 611, which forms a large angle with the connection conduit 620. In an embodiment, the air having moved to the second passage 622 of the first conduit 611 may be reflected by the partition wall part 650 and then be directed to the first passage 621 of the first conduit 611. In this case, the air directed to the first passage 621 of the first conduit 611 may be in a state of having relatively low energy due to the partition wall part 650. In an embodiment, the air having been introduced into the first conduit 611 may pass through the first path part 630 and then be discharged to the inlet 600h. In an embodiment, the inlet 600h may be connected to the first space 1000h formed through the microphone module 500 and the waterproof member 300.

In an embodiment, as illustrated in FIG. 8A, the air having been introduced into the outlet 600H may pass through the second path part 630a and then preferentially move to the second passage 622 of the second conduit 612, which forms a large angle with the second path part 630a. In an embodiment, the air having moved to the second passage 622 of the second conduit 612 may be reflected by the (2-1)th terminal end part 6121 and then be directed to the first passage 621 of the second conduit 612. In this case, the air directed to the second passage 622 of the second conduit 612 may be directed to the first passage 621 of the second conduit 612 in a state of having relatively low energy due to the (2-1)th terminal end part 6121. In an embodiment, the connection conduit 620 from which the first passage 621 and the second passage 622 of the first conduit 611 are branched may be disposed in the first passage 621 of the second conduit 612. In an embodiment, the air having moved to the first passage 621 of the second conduit 612 may be reflected by the (2-2)th terminal end part 6122 and then be directed to the second passage 622 of the second conduit 612 or the connection conduit 620. In this case, the air directed to the first passage 621 of the second conduit 612 may be directed to the second passage 622 of the second conduit 612 or the connection conduit 620 in a state of having relatively low energy due to the (2-2)th terminal end part 6122. In an embodiment, the air having been introduced into the second conduit 612 may pass through the connection conduit 620 and then preferentially move to the second passage 622 of the first conduit 611, which forms a large angle with the connection conduit 620. In an embodiment, the air having moved to the second passage 622 of the first conduit 611 may be reflected by the (1-1)th terminal end part 6111 and then be directed to the first passage 621 of the first conduit 611. In this case, the air directed to the first passage 621 of the first conduit 611 may be directed to the first passage 621 of the first conduit 611 in a state of having relatively low energy due to the (1-1)th terminal end part 6111. In an embodiment, the first path part 630 connected to the inlet 600h may be disposed in the first passage 621 of the first conduit 611. In an embodiment, the air having moved to the first passage 621 of the first conduit 611 may be reflected by the (1-2)th terminal end part 6112 and then be directed to the second passage 622 of the first conduit 611 or the first path part 630. In this case, the air directed to the first passage 621 of the first conduit 611 may be directed to the second passage 622 of the first conduit 611 or the first path part 630 in a state of having relatively low energy due to the (1-2)th terminal end part 6112. In an embodiment, the air having been introduced into the first conduit 611 may pass through the first path part 630 and then be discharged to the inlet 600h. In an embodiment, the inlet 600h may be connected to the first space 1000h formed through the microphone module 500 and the waterproof member 300.

In an embodiment, referring to FIG. 8A and FIG. 8D, the multiple conduits 610 may include the at least one closed-loop-shaped conduit 640. In an embodiment, in case that the air having been introduced into the inlet 600h or the outlet 600H passes through the closed-loop-shaped conduit 640, the energy of the air may be reduced. Additionally, the closed-loop-shaped conduit 640 may help confine air movement in a circular path, facilitating slow diffusion of air pressure and reducing acoustic interference within the housing 210.

In an embodiment, referring to FIG. 5A and FIG. 5B, air may be ventilated between the second space 1000H which is an outer space of the housing 210 and the first space 1000h for connecting the sound hole 210h of the housing 210 and the microphone hole 500h of the microphone module 500, through the ventilation member 600. In an embodiment, air may be slowly ventilated between the first space 1000h and the second space 1000H through the ventilation member 600. In an embodiment, air pressure equilibrium may be achieved between the first space 1000h and the second space 1000H, through the ventilation member 600.

In an embodiment, referring to FIG. 8A to FIG. 10C, the energy of air may be reduced due to the partition wall part 650, the closed-loop-shaped conduit 640, or the multiple conduits 610. For example, a sound output from a speaker module (not shown) positioned in the second space 1000H may be introduced into the multiple conduit 610 through the outlet 600H of the ventilation member 600. The sound output from the speaker module may be emitted to the inlet 600h via the multiple conduits 610. The sound of the speaker module emitted to the inlet 600h may have energy reduced than the energy of sound before being introduced into the outlet 600H. For example, the sound of the speaker module may have energy which is reduced as the sound travels toward the inlet 600h while passing through the multiple conduits 610 for connecting the inlet 600h and the outlet 600H. In case that the energy of the sound is reduced, the volume of the sound may be reduced. Accordingly, the degree to which the sound output from the speaker module is transmitted to the microphone module 500 may be alleviated or reduced. Accordingly, in a situation of communication, the echo phenomenon, which may be caused by the sound output from the speaker module and transmitted to the microphone module 500, may be alleviated or reduced.

In an embodiment, referring to FIG. 8A to FIG. 10C, noise (e.g., sound output from a speaker module (not shown) or sound generated from internal components of an electronic device (e.g., the electronic device 200 in FIG. 2 or the electronic device 400 in FIG. 4) generated in the second space 1000H may be introduced into the multiple conduits 610 through the outlet 600H. In an embodiment, the energy of noise generated in the second space 1000H may be reduced as the noise passes through the multiple conduits 610, the connection conduit 620, and/or the closed-loop-shaped conduit 640. In an embodiment, the degree to which noise generated in the second space 1000H is introduced into the microphone module 500 may be reduced as the noise passes through the multiple conduits 610, the connection conduits 620, and/or the closed-loop-shaped conduit 640.

In an embodiment, referring to FIG. 8B to FIG. 10C, the multiple conduits 610 may include the first conduit 611, the second conduit 612, and the third conduit 613.

In an embodiment, the first conduit 611 may be connected to the inlet 600h. In an embodiment, the second conduit 612 may be connected to the outlet 600H. In an embodiment, at least one third conduit 613 may be disposed between the first conduit 611 and the second conduit 612.

In an embodiment, at least one of the first conduit 611, the third conduit 613 and the second conduit 612 may be formed in a discontinuous loop shape segmented by the partition wall part 650.

In an embodiment, the third conduit 613 may be formed in a shape surrounding the first conduit 611 from the outside of the first conduit 611. In an embodiment, the second conduit 612 may be formed in a shape surrounding the third conduit 613 from the outside of the third conduit 613.

In an embodiment, the connection conduit 620 may connect the first conduit 611 and the third conduit 613, and the third conduit 613 and the second conduit 612.

In an embodiment, as illustrated in FIG. 8C and FIG. 10B, the air having been introduced into the inlet 600h may pass through the first path part 630 and then move to a second passage 622a of the first conduit 611, which forms a large angle with the first path part 630. In an embodiment, the air having moved to the second passage 622a of the first conduit 611 may be reflected by the partition wall part 650 and then be directed to a first passage 621a of the first conduit 611. In this case, the air directed to the first passage 621a of the first conduit 611 may be in a state of having relatively low energy due to the partition wall part 650. In an embodiment, the first connection conduit 6201 from which a first passage 621c and a second passage 622c of the third conduit 613 are branched may be connected to the first passage 621a of the first conduit 611. In an embodiment, the air having been introduced into the first conduit 611 may pass through the first connection conduit 6201 and then move to the second passage 622c of the third conduit 613, which forms a large angle with the first connection conduit 6201. In an embodiment, the air having moved to the second passage 622c of the third conduit 613 may be reflected by the partition wall part 650 and then be directed to the first passage 621c of the third conduit 613. In this case, the air directed to the first passage 621c may be in a state of having relatively low energy due to the partition wall part 650. In an embodiment, the second connection conduit 6202 from which the first passage 621b and the second passage 622b of the second conduit 612 are branched may be connected to the first passage 621c of the third conduit 613. In an embodiment, the air having been introduced into the third conduit 613 may pass through the second connection conduit 6202 and then move to the second passage 622b of the second conduit 612, which forms a large angle with the second connection conduit 6202. In an embodiment, the air having moved to the second passage 622b of the second conduit 612 may be reflected by the partition wall part 650 and then be directed to the first passage 621b of the second conduit 612. In this case, the air directed to the first passage 621b of the second conduit 612 may be in a state of having relatively low energy due to the partition wall part 650. In an embodiment, the air having been introduced into the second conduit 612 may pass through the second path part 630a and may be discharged to the outlet 600H. In an embodiment, the outlet 600H may be connected to the second space 1000H which is the outer space of the housing 210.

In an embodiment, as illustrated in FIG. 8C, the air having been introduced into the inlet 600h may pass through the first path part 630 and then preferentially move to the second passage 622a of the first conduit 611, which forms a large angle with the first path part 630. In an embodiment, the air having moved to the second passage 622a of the first conduit 611 may be reflected by the (1-2)th terminal end part 6112 and then be directed to the first passage 621a of the first conduit 611. In this case, the air directed to the second passage 622a of the first conduit 611 may be directed to the first passage 621a of the first conduit 611 in a state of having relatively low energy due to the (1-2)th terminal end part 6112. In an embodiment, the first connection conduit 6201 from which a first passage 621c and a second passage 622c of the third conduit 613 are branched may be disposed in the first passage 621a of the first conduit 611. In an embodiment, the air having moved to the first passage 621a of the first conduit 611 may be reflected by the (1-1)th terminal end part 6111 and then be directed to the second passage 622a of the first conduit 611 or the first connection conduit 6201. In this case, the air directed to the first passage 621a of the first conduit 611 may be directed to the second passage 622a of the first conduit 611 or the first connection conduit 6201 in a state of having relatively low energy due to the (1-1)th terminal end part 6111. In an embodiment, the air having been introduced into the first conduit 611 may pass through the first connection conduit 6201 and then preferentially move to the second passage 622c of the third conduit 613, which forms a large angle with the first connection conduit 6201. In an embodiment, the air having moved to the second passage 622c of the third conduit 613 may be reflected by the (3-2)th terminal end part (not shown) and then be directed to the first passage 621c of the third conduit 613. In this case, the air directed to the second passage 622c of the third conduit 613 may be directed to the first passage 621c of the third conduit 613 in a state of having relatively low energy due to the (3-2)th terminal end part (not shown). In an embodiment, the multiple third conduits 613 may be connected to each other through the third connection conduit 6203. In an embodiment, the second connection conduit 6202 from which the first passage 621b and the second passage 622b of the second conduit 612 are branched may be connected to the first passage 621c of the third conduit 613. In an embodiment, the air having moved to the first passage 621c of the third conduit 613 may be reflected by the (3-1)th terminal end part (not shown) and then be directed to the second passage 622b of the second conduit 612 or the second connection conduit 6202. In this case, the air directed to the first passage 621c of the third conduit 613 may be directed to the second passage 622b of the second conduit 612 or the second connection conduit 6202 in a state of having relatively low energy due to the (3-1)th terminal end part (not shown). In an embodiment, the air having been introduced into the third conduit 613 may pass through the second connection conduit 6202 and then preferentially move to the second passage 622b of the second conduit 612, which forms a large angle with the second connection conduit 6202. In an embodiment, the air having moved to the second passage 622b of the second conduit 612 may be reflected by the (2-2)th terminal end part 6122 and then be directed to the first passage 621b of the second conduit 612. In this case, the air directed to the second passage 622b of the second conduit 612 may be directed to the first passage 621b of the second conduit 612 in a state of having relatively low energy due to the (2-2)th terminal end part 6122. In an embodiment, the second path part 630a connected to the outlet 600H may be disposed in the first passage 621b of the second conduit 612. In an embodiment, the air having moved to the first passage 621b of the second conduit 612 may be reflected by the (2-1)th terminal end part 6121 and then be directed to the second passage 622b of the second conduit 612 or the second path part 630a. In this case, the air directed to the first passage 621b of the second conduit 612 may be directed to the second passage 622b of the second conduit 612 or the second path part 630a in a state of having relatively low energy due to the (2-1)th terminal end part 6121. In an embodiment, the air having been introduced into the second conduit 612 may pass through the second path part 630a and may be discharged to the outlet 600H. In an embodiment, the outlet 600H may be connected to the second space 1000H which is the outer space of the housing 210.

In an embodiment, as illustrated in FIG. 8D and FIG. 10C, the air having been introduced into the outlet 600H may pass through the second path part 630a and then be preferentially connected to the second passage 622b of the second conduit 612, which forms a large angle with the second path part 630a, to be blocked by the partition wall part 650. In an embodiment, the air having energy reduced due to the partition wall part 650 may be connected to the first passage 621b of the second conduit 612. In an embodiment, the connection conduit 620 from which a first passage 621c and a second passage 622c of the third conduit 613 are branched may be connected to the first passage 621b of the second conduit 612. In an embodiment, the air having been introduced into the second conduit 612 may pass through the connection conduit 620 and then be preferentially connected to the second passage 622c of the third conduit 613, which forms a large angle with the connection conduit 620, to be blocked by the partition wall part 650. In an embodiment, the air having energy reduced due to the partition wall part 650 may be connected to the first passage 621c of the third conduit 613. In an embodiment, the connection conduit 620 from which the first passage 621a and the second passage 622a of the first conduit 611 are branched may be connected to the first passage 621c of the third conduit 613. In an embodiment, the air having been introduced into the third conduit 613 may pass through the connection conduit 620 and then move to the second passage 622a of the first conduit 611, which forms a large angle with the connection conduit 620. In an embodiment, the air having moved to the second passage 622a of the first conduit 611 may be reflected by the partition wall part 650 and then be directed to a first passage 621a of the first conduit 611. In this case, the air directed to the first passage 621a of the first conduit 611 may be in a state of having relatively low energy due to the partition wall part 650. In an embodiment, the air having been introduced into the first conduit 611 may pass through the first path part 630 and then be discharged to the inlet 600h. In an embodiment, the inlet 600h may be connected to the first space 1000h formed through the microphone module 500 and the waterproof member 300.

In an embodiment, as illustrated in FIG. 8D, the air having been introduced into the outlet 600H may pass through the second path part 630a and then preferentially move to the second passage 622b of the second conduit 612, which forms a large angle with the second path part 630a. In an embodiment, the air having moved to the second passage 622b of the second conduit 612 may be reflected by the (2-1)th terminal end part 6121 and then be directed to the first passage 621b of the second conduit 612. In this case, the air directed to the second passage 622 of the second conduit 612 may be directed to the first passage 621b of the second conduit 612 in a state of having relatively low energy due to the (2-1)th terminal end part 6121. In an embodiment, the second connection conduit 6202 from which a first passage 621c and a second passage 622c of the third conduit 613 are branched may be disposed in the first passage 621b of the second conduit 612. In an embodiment, the air having moved to the first passage 621b of the second conduit 612 may be reflected by the (2-2)th terminal end part 6122 and then be directed to the second passage 622b of the second conduit 612 or the second connection conduit 6202. In this case, the air directed to the first passage 621b of the second conduit 612 may be directed to the second passage 622b of the second conduit 612 or the second connection conduit 6202 in a state of having relatively low energy due to the (2-2)th terminal end part 6122. In an embodiment, the air having been introduced into the second conduit 612 may pass through the second connection conduit 6202 and then preferentially move to the second passage 622c of the third conduit 613, which forms a large angle with the second connection conduit 6202. In an embodiment, the air having moved to the second passage 622c of the third conduit 613 may be reflected by the (3-1)th terminal end part (not shown) and then be directed to the first passage 621c of the third conduit 613. In this case, the air directed to the second passage 622c of the third conduit 613 may be directed to the first passage 621c of the third conduit 613 in a state of having relatively low energy due to the (3-1)th terminal end part (not shown). In an embodiment, the multiple third conduits 613 may be connected to each other through the third connection conduit 6203. In an embodiment, the first connection conduit 6201 from which the first passage 621a and the second passage 622a of the first conduit 611 are branched may be connected to the first passage 621c of the third conduit 613. In an embodiment, the air having moved to the first passage 621c of the third conduit 613 may be reflected by the (3-2)th terminal end part (not shown) and then be directed to the second passage 622a of the first conduit 611 or the first connection conduit 6201. In this case, the air directed to the first passage 621c of the third conduit 613 may be directed to the second passage 622a of the first conduit 611 or the first connection conduit 6201 in a state of having relatively low energy due to the (3-2)th terminal end part (not shown). In an embodiment, the air having been introduced into the third conduit 613 may pass through the first connection conduit 6201 and then preferentially move to the second passage 622a of the first conduit 611, which forms a large angle with the first connection conduit 6201. In an embodiment, the air having moved to the second passage 622a of the first conduit 611 may be reflected by the (1-1)th terminal end part 6111 and then be directed to the first passage 621a of the first conduit 611. In this case, the air directed to the second passage 622a of the first conduit 611 may be directed to the first passage 621a of the first conduit 611 in a state of having relatively low energy due to the (1-1)th terminal end part 6111. In an embodiment, the first path part 630 connected to the inlet 600h may be disposed in the first passage 621a of the first conduit 611. In an embodiment, the air having moved to the first passage 621a of the first conduit 611 may be reflected by the (1-2)th terminal end part 6112 and then be directed to the second passage 622a of the first conduit 611 or the first path part 630. In this case, the air directed to the first passage 621a of the first conduit 611 may be directed to the second passage 622a of the first conduit 611 or the first path part 630 in a state of having relatively low energy due to the (1-2)th terminal end part 6112. In an embodiment, the air having been introduced into the first conduit 611 may pass through the first path part 630 and then be discharged to the inlet 600h. In an embodiment, the inlet 600h may be connected to the first space 1000h formed through the microphone module 500 and the waterproof member 300.

FIG. 9A and FIG. 9B are plan views of the ventilation member in FIG. 5A according to an embodiment of the disclosure.

In an embodiment, as illustrated in FIG. 9A and FIG. 9B, the angles formed by the connection conduit 620 and the first passage 621 and the connection conduit and the second passage 622 are equal to each other.

In an embodiment, referring to FIG. 9B, a part of the first passage 621 of the third conduit 613 may be formed in a shape surrounding the second passage 622 and a part of the remaining parts of the first passage 621 of the third conduit 613. In an embodiment, the energy of air having been introduced into the third conduit 613 through the first connection conduit 6201 may be reduced as the air moves through the first passage 621 of the third conduit 613. In an embodiment, the energy of air having been introduced into the third conduit 613 through the third connection conduit 6203 may be reduced as the air moves through the first passage 621 of the third conduit 613.

In an embodiment, a part of at least one first passage 621 of the multiple conduits 610 may be formed in a shape surrounding the second passage 622 and a part of the remaining parts of the first passage 621. In an embodiment, the energy of air having been introduced through the inlet 600h or the outlet 600H may be reduced as the air moves through the first passage 621.

In the following descriptions, descriptions of configurations identical to or similar to the above-described configurations are omitted, and are replaced with the descriptions of FIG. 8A and FIG. 8D.

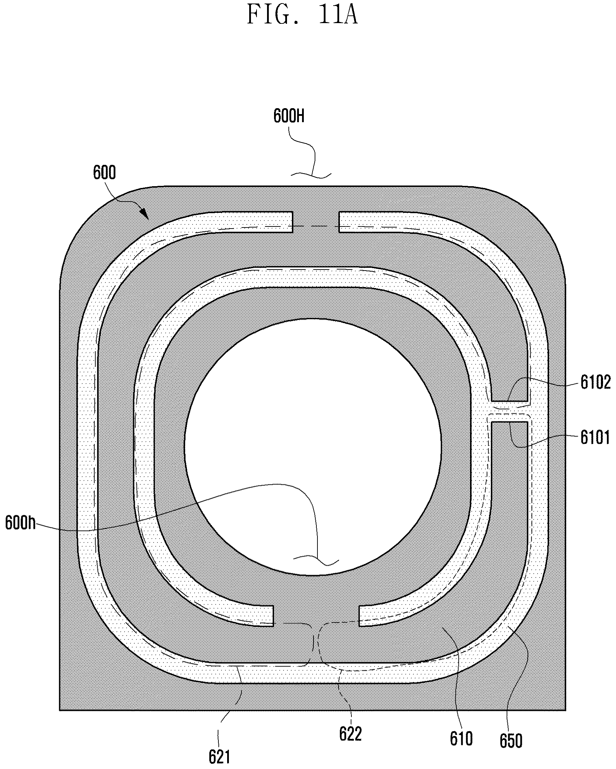

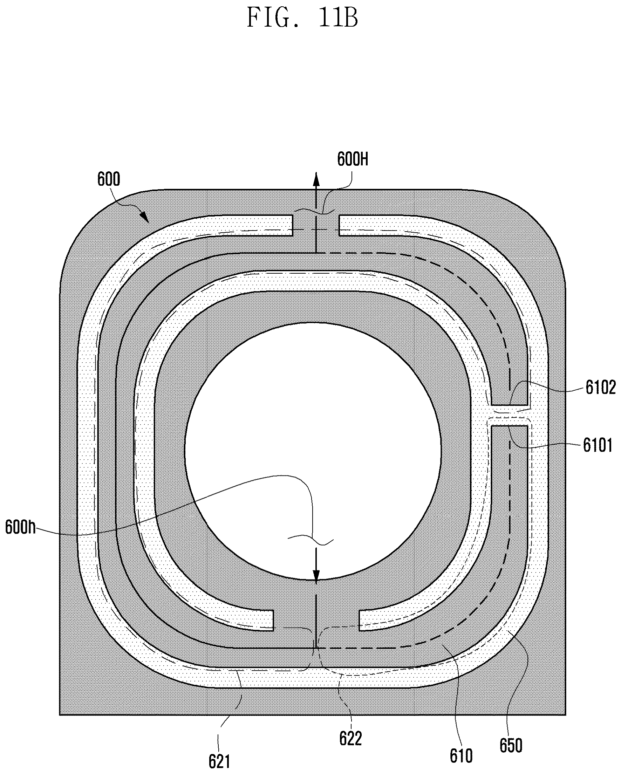

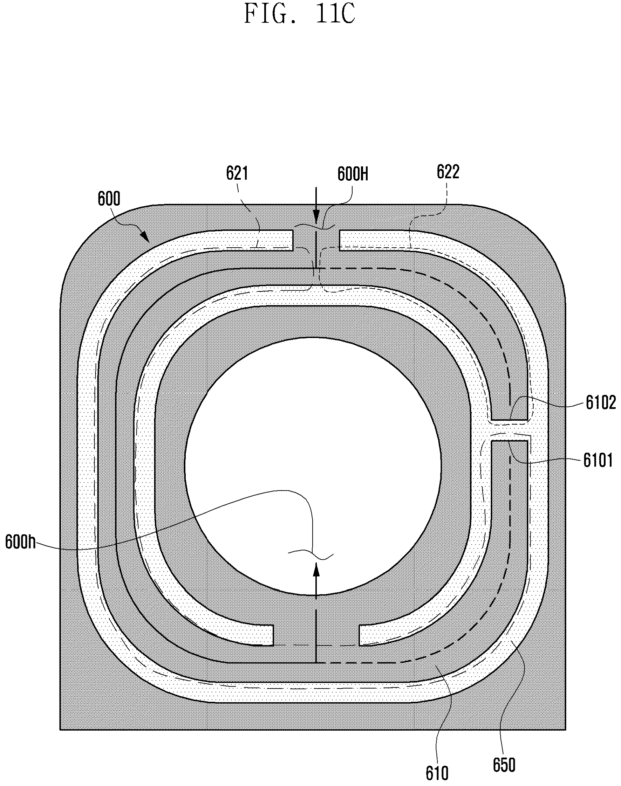

FIG. 11A is a plan view of a ventilation member 600 in FIG. 7, which includes multiple conduits. FIG. 11B is a plan view of a ventilation member 600 in FIG. 7, which includes multiple conduits 610 through which the air having been introduced into an inlet 600h moves to an outlet 600H. FIG. 11C is a plan view of a ventilation member 600 in FIG. 7, which includes multiple conduits 610 through which the air having been introduced into an outlet 600H moves to an inlet 600h.

In an embodiment, referring to FIG. 11A, the conduit 610 having a discontinuous loop shape segmented by the partition wall part 650 may be branched into a first passage 621 and a second passage 622 shorter than the first passage 621. In an embodiment, the partition wall part 650 may be disposed at the ends of the first passage 621 and the second passage 622.

In an embodiment, as illustrated in FIG. 11B, the air having been introduced into the inlet 600h may move to the first passage 621 or the second passage 622. In an embodiment, the air having moved to the second passage 622 may be reflected by the partition wall part 650 and then be directed to the first passage 621. In this case, the air directed to the first passage 621 may be in a state of having relatively low energy due to the partition wall part 650. In an embodiment, the air having moved to the first passage 621 may be discharged to the outlet 600H. In an embodiment, the outlet 600H may be connected to the second space 1000H which is the outer space of the housing 210.

In an embodiment, as illustrated in FIG. 11C, the air having been introduced into the outlet 600H may move to the first passage 621 or the second passage 622. In an embodiment, the air having moved to the second passage 622 may be reflected by the partition wall part 650 and then be directed to the first passage 621. In this case, the air directed to the first passage 621 may be in a state of having relatively low energy due to the partition wall part 650. In an embodiment, the air having moved to the first passage 621 may be discharged to the inlet 600h. In an embodiment, the inlet 600h may be connected to the first space 1000h formed through the microphone module 500 and the waterproof member 300. In the following descriptions, descriptions of configurations identical to or similar to the above-described configurations are omitted, and are replaced with the descriptions of FIG. 8A and FIG. 8D.

In an embodiment, the microphone module 500 may be disposed between the housing 210 and the second surface 510b of the microphone printed circuit board 510 and on the second surface 510b of the microphone printed circuit board 510. In an embodiment, the microphone module 500 may include a microphone hole 500h. In an embodiment, the microphone hole 500h may correspond to the sound hole 210h of the housing 210. In an embodiment, the second hole 310h of the support member 310, the third hole 321h of the first shielding member 321, the inlet 600h of the ventilation member 600, and the first hole 510h of the microphone printed circuit board 510 may be connected to the microphone hole 500h. In the following descriptions, descriptions of configurations identical to or similar to the above-described configurations are omitted, and are replaced with the descriptions of FIG. 5A to FIG. 9.

In an embodiment, the ventilation member 600 may be formed of a metal (e.g., stainless steel, aluminum alloy, carbon steel, copper, aluminum, nickel, iron, titanium, and/or tin) material, an epoxy material, or a fiber (e.g., non-woven fabric, PET, felt, Gore-Tex, polyurethane, nylon, polyester, and/or polypropylene) material. The different material may enable to adjust acoustic and thermal characteristics; fiber for acoustic dampening, metal for structural integrity.

In an embodiment, referring to FIG. 5A to FIG. 6C and FIG. 8A to FIG. 10C, in case that the ventilation member 600 is made of a metal material, by etching a metal plate, the multiple conduits 610 may be formed in intaglio shapes and the partition wall part 650 may be formed in an embossed shape. In an embodiment, in case that the ventilation member 600 is made of an epoxy metal material, by drill cutting an epoxy plate, the multiple conduits 610 may be formed in intaglio shapes and the partition wall part 650 may be formed in an embossed shape. In an embodiment, each of the conduits 610 may be formed to have a width of 0.2 mm or less and a height of 0.2 mm or less.

In an embodiment, referring to FIG. 5A to FIG. 6C and FIG. 8A to FIG. 10C, in case that the ventilation member 600 is made of a metal material or an epoxy material, the second shielding member 322 may be disposed on one surface of the ventilation member 600. In an embodiment, the second shielding member 322 may be disposed on one surface of the ventilation member 600, so that air moves through the multiple conduits 610 having intaglio shapes. In an embodiment, the second shielding member 322 may be disposed on one surface of the ventilation member 600, so that the air having been introduced into the inlet 600h through the multiple conduits 610 having intaglio shapes moves to the outlet 600H. In an embodiment, the second shielding member 322 may be disposed on one surface of the ventilation member 600, so that the air having been introduced into the outlet 600H through the multiple conduits 610 having intaglio shapes moves to the inlet 600h.

In an embodiment, referring to FIG. 7 and FIG. 11A to FIG. 11C, in case that the ventilation member 600 is made of a fiber material, the partition wall part 650 may be formed of a compressed fiber material which does not allow air to pass therethrough, and the conduits 610 may be formed of a fiber material which allows air to pass therethrough. In an embodiment, in case that the ventilation member 600 is made of a fiber material, the ventilation member may have an air permeability of about 0.1 to 0.2 ml/min. In an embodiment, in case that the ventilation member 600 is made of a fiber material, air may pass through the partition wall part 650. In an embodiment, in case that air having been introduced into the inlet 600h or outlet 600H passes through the conduits 610 and/or the partition wall part 650, the energy of the air may be reduced. In an embodiment, in case that the ventilation member 600 is made of a fiber material, air may slowly pass between the first space 1000h and the second space 1000H through the conduits 610 and/or the partition wall part 650. In an embodiment, in case that the ventilation member 600 is made of a fiber material, air pressure equilibrium may be achieved between the first space 1000h and the second space 1000H through the conduits 610 and/or the partition wall part 650.

In an embodiment, referring to FIG. 7 and FIG. 11A to FIG. 11C, in case that the ventilation member 600 is made of a fiber material, the second shielding member 322 may be disposed on one surface of the ventilation member 600, and the third shielding member 323 may be disposed on the other surface of the ventilation member 600, which is a surface opposite to the one surface. In an embodiment, the second shielding member 322 and the third shielding member 323 may be respectively arranged on one surface and the other surface of the ventilation member 600, so that air moves through the multiple conduits 610 made of a fiber material. In an embodiment, the second shielding member 322 and the third shielding member 323 may be respectively arranged on one surface and the other surface of the ventilation member 600, so that the air having been introduced into the inlet 600h through the multiple conduits 610 of the fiber material moves to the outlet 600H. In an embodiment, the second shielding member 322 and the third shielding member 323 may be respectively arranged on one surface and the other surface of the ventilation member 600, so that the air having been introduced into the outlet 600H through the multiple conduits 610 of the fiber material moves to the inlet 600h.

An electronic device 200 according to an embodiment of the disclosure includes a housing 210 including a sound hole 210h.

In an embodiment, the electronic device includes a microphone module 500 which includes a microphone hole 500h and is disposed in the housing.

In an embodiment, the electronic device includes a guide member 3000 including a first space 1000h between the sound hole and the microphone hole.

In an embodiment, the electronic device includes a ventilation member 600 disposed between the housing and the microphone module.

In an embodiment, the ventilation member includes a first conduit 611 including a (1-1)th terminal end part 6111 and a (1-2)th terminal end part 6112.

In an embodiment, the ventilation member includes an inlet 600h connected to the first conduit extending from the (1-1)th terminal end part and the (1-2)th terminal end part.

In an embodiment, the inlet allows a fluid to communicate with the first space.

In an embodiment, the ventilation member includes a second conduit 612 including a (2-1)th terminal end part 6121 and a (2-2)th terminal end part 6122.

In an embodiment, the ventilation member includes an outlet 600H connected to the second conduit extending from the (2-1)th terminal end part and the (2-2)th terminal end part.

In an embodiment, the outlet allows a fluid to communicate with a second space 1000H which is an outer space of the guide member.

In an embodiment, the ventilation member includes at least one connection conduit 620 configured to connect the first conduit and the second conduit.

In an embodiment, the second conduit has a circumference greater than the circumference of the first conduit.

In an embodiment, the electronic device may include a microphone printed circuit board 510 having a first surface 510a on which the microphone module is disposed.

In an embodiment, the microphone printed circuit board may include a first hole 510h connected to the microphone hole.

In an embodiment, the guide member may be disposed between the housing and a second surface 510b of the microphone printed circuit board, the second surface being opposite to the first surface.

In an embodiment, the ventilation member may be disposed between the guide member and the second surface of the microphone printed circuit board.

In an embodiment, the ventilation member may include a partition wall part 650 disposed between the (1-1)th terminal end part and the (1-2)th terminal end part and between the (2-1)th terminal end part and the (2-2)th terminal end part, to segment the first conduit and the second conduit.

In an embodiment, the first conduit and the second conduit may be formed in discontinuous loop shapes segmented by the partition wall part.

In an embodiment, air having been introduced into the inlet or the outlet may move through the conduit and the connection conduit, and may be blocked by the partition wall part.

In an embodiment, the ventilation member may include a closed-loop-shaped conduit 640 connected to at least one of the first conduit and the second conduit.

In an embodiment, each of the first conduit and the second conduit may be branched into a first passage 621 and a second passage 622 shorter than the first passage with reference to the connection conduit.

In an embodiment, the connection conduit may be connected to the first conduit and the second conduit so that an angle A2 formed by the connection conduit and the second passage is greater than an angle A1 formed by the connection conduit and the first passage.

In an embodiment, the ventilation member may include a first path part 630 extending from the first conduit to connect the inlet and the first conduit.

In an embodiment, the ventilation member may include a second path part 630a extending from the second conduit to connect the outlet and the second conduit.

In an embodiment, each of the first conduit and the second conduit may be branched into a first passage and a second passage shorter than the first passage with reference to the first path part or the second path part.

In an embodiment, the first path part or the second path part may be connected to the conduit so that an angle B2 or C2 formed by the first path part or the second path part and the second passage is greater than an angle B1 or C1 formed by the first path part or the second path part and the first passage.

In an embodiment, the ventilation member may be formed of a metal, an epoxy, or a fiber material

In an embodiment, the guide member may include a waterproof member 300 disposed on an inner surface of the housing to shield the sound hole.

In an embodiment, the waterproof member may be formed of a porous or a non-porous membrane.

In an embodiment, the guide member may include a support member 310 disposed between the waterproof member and the microphone module and on one surface of the waterproof member.

In an embodiment, the support member may include a second hole 310h which allows a fluid to communication with the first space.

In an embodiment, the support member may include a first support member 311 including a (2-1)th hole 311h.

In an embodiment, the first support member may be formed of a porous material.

In an embodiment, the support member may include a second support member 312 which is disposed on one surface of the first support member and includes a (2-2)th hole 312h.

In an embodiment, the second support member may be formed of a metal material.

In an embodiment, the guide member may include a shielding member 320 disposed between the support member and the microphone module.

In an embodiment, the shielding member may include a third hole (321h) which allows a fluid to communicate with the first space.

In an embodiment, pressure equilibrium between the fluids in the first space and the second space may be achieved through the ventilation member.

In an embodiment, the fluid in the second space may be introduced into the first space through the ventilation member so that the energy thereof is reduced.

In an embodiment, the ventilation member may include at least one third conduit 613 which includes a (3-1)th terminal end part and a (3-2)th terminal end part and is disposed between the first conduit and the second conduit.

In an embodiment, the ventilation member may include at least one connection conduit 620 configured to connect the first conduit, the second conduit, and the third conduit.

In an embodiment, the second conduit may be formed to have a circumference greater than the circumference of the third conduit.

In an embodiment, the circumference of the third conduit may be formed to be greater than the circumference of the first conduit.

The electronic device according to various embodiments set forth herein may be one of various types of electronic devices. The electronic device may include, for example, a portable communication device (e.g., a smart phone), a computer device (e.g., a notebook), a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and the disclosure includes various changes or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. Therefore, the scope of various embodiments of the disclosure should be construed to include, in addition to the embodiments set forth herein, all changes and modifications derived based on the technical idea of various embodiments of the disclosure.

The following additional aspects of the present disclosure are also defined:
Aspect 1. The electronic device of any of the embodiments described above, wherein the ventilation member comprises: a first path part extending from the first conduit to connect the inlet and the first conduit; and a second path part extending from the second conduit to connect the outlet and the second conduit.
Aspect 2. The electronic device of Aspect 2, wherein each of the first conduit and the second conduit is branched into a first passage and a second passage shorter than the first passage with reference to the first path part or the second path part, and wherein the first path part or the second path part is connected to the conduit so that an angle formed by the first path part or the second path part and the second passage is greater than an angle formed by the first path part or the second path part and the first passage.

### [Description of Reference Numerals]

210: Housing
210h: Sound hole
500: Microphone module
500h: First hole
510: Microphone printed circuit board
510h: Microphone hole
300: Waterproof member
310: Support member
310h: Second hole
320: Shielding member
320h: Third hole
600: Ventilation member
600h: Inlet
600H: Outlet
610: Conduit
611: First conduit
612: Second conduit
613: Third conduit
620: Connection conduit
621: First passage
622: Second passage
640: Closed-loop-shaped conduit
650: Partition wall part
1000h: First space
1000H: Second space

## Claims

1. An electronic device (200) comprising:
a housing (210) comprising a sound hole (210h);
a microphone module (500) which comprises a microphone hole (500h) and is disposed in the housing;
a guide member (3000) comprising a first space (1000h) between the sound hole and the microphone hole; and
a ventilation member (600) disposed between the housing and the microphone module,
wherein the ventilation member comprises:
a first conduit (611) comprising a (1-1)th terminal end part (6111) and a (1-2)th terminal end part (6112);
an inlet (600h) which is connected to the first conduit extending from the (1-1)th terminal end part and the (1-2)th terminal end part and allows a fluid to communicate with the first space;
a second conduit (612) comprising a (2-1)th terminal end part (6121) and a (2-2)th terminal end part (6122);
an outlet (600H) which is connected to the second conduit extending from the (2-1)th terminal end part and the (2-2)th terminal end part and allows a fluid to communicate with a second space (1000H) which is an outer space of the guide member; and
at least one connection conduit (620) configured to connect the first conduit and the second conduit, and
wherein the second conduit has a circumference greater than the circumference of the first conduit.

2. The electronic device of claim 1, wherein the electronic device further comprises a microphone printed circuit board (510) having a first surface (510a) on which the microphone module is disposed and comprising a first hole (510h) connected to the microphone hole,
wherein the guide member is disposed between the housing and a second surface (510b) of the microphone printed circuit board, the second surface being opposite to the first surface, and
wherein the ventilation member is disposed between the guide member and the second surface of the microphone printed circuit board.

3. The electronic device of claim 1 or 2, wherein the ventilation member further comprises a partition wall part (650) disposed between the (1-1)th terminal end part and the (1-2)th terminal end part and between the (2-1)th terminal end part and the (2-2)th terminal end part, and
wherein the first conduit and the second conduit have discontinuous loop shapes segmented by the partition wall part.

4. The electronic device of any of claims 1 to 3, wherein a fluid having been introduced into the inlet or the outlet moves through the first conduit, the second conduit, and the connection conduit, and is blocked by the partition wall part.

5. The electronic device of any of claims 1 to 4, wherein the ventilation member comprises a closed-loop-shaped conduit (640) connected to at least one of the first conduit and the second conduit.

6. The electronic device of any of claims 1 to 5, wherein each of the first conduit and the second conduit is branched into a first passage (621) and a second passage (622) shorter than the first passage with reference to the connection conduit, and
wherein the connection conduit is connected to the first conduit and the second conduit so that an angle (A2) formed by the connection conduit and the second passage is greater than an angle (A1) formed by the connection conduit and the first passage.

7. The electronic device of any of claims 1 to 6, wherein the ventilation member comprises:
a first path part (630) extending from the first conduit to connect the inlet and the first conduit; and
a second path part (630a) extending from the second conduit to connect the outlet and the second conduit.

8. The electronic device of claim 7, wherein each of the first conduit and the second conduit is branched into a first passage and a second passage shorter than the first passage with reference to the first path part or the second path part, and
wherein the first path part or the second path part is connected to the conduit so that an angle (B2, C2) formed by the first path part or the second path part and the second passage is greater than an angle (B1, C1) formed by the first path part or the second path part and the first passage.

9. The electronic device of any of claims 1 to 8, wherein the ventilation member comprises a metal, an epoxy, or a fiber material.

10. The electronic device of any of claims 1 to 9, wherein the guide member comprises a waterproof member (300) which is disposed on an inner surface of the housing to shield the sound hole and formed of a porous or a non-porous membrane.

12. The electronic device of claim 10, wherein the guide member comprises a support member (310) which is disposed between the waterproof member and the microphone module and on one surface of the waterproof member and comprises a second hole (310h) which allows a fluid to communicate with the first space.

13. The electronic device of claim 11, wherein the support member comprises:
a first support member (311) which is formed of a porous material and comprises a (2-1)th hole (311h); and
a second support member (312) which is disposed on one surface of the first support member, is formed of a metal material, and comprises a (2-2)th hole (312h).

14. The electronic device of claim 11, wherein the guide member further comprises a shielding member (320) which is disposed between the support member and the microphone module and comprises a third hole (321h) which allows a fluid to communicate with the first space.

15. The electronic device of any of claims 1 to 13, wherein pressure equilibrium between the fluids in the first space and the second space is achieved through the ventilation member.

16. The electronic device of any of claims 1 to 14, wherein the fluid in the second space is introduced into the first space through the ventilation member so as to reduce the energy of the fluid.

17. The electronic device of any of claims 1 to 15, wherein the electronic device further comprises at least one third conduit (613) which comprises a (3-1)th terminal end part and a (3-2)th terminal end part and is disposed between the first conduit and the second conduit,
wherein the at least one connection conduit (620) is configured to connect the first conduit, the second conduit, and the third conduit,
wherein the second conduit has a circumference greater than the circumference of the third conduit, and
wherein the circumference of the third conduit is greater than the circumference of the first conduit.

18. A ventilation member (600) comprising:
a first conduit (611) comprising a (1-1)th terminal end part (6111) and a (1-2)th terminal end part (6112);
an inlet (600h) connected to the first conduit extending from the (1-1)th terminal end part and the (1-2)th terminal end part;
a second conduit (612) comprising a (2-1)th terminal end part (6121) and a (2-2)th terminal end part (6122);
an outlet (600H) connected to the second conduit extending from the (2-1)th terminal end part and the (2-2)th terminal end part; and
at least one connection conduit (620) configured to connect the first conduit and the second conduit,
wherein the second conduit has a circumference greater than the circumference of the first conduit.

19. The electronic device of claim 17, wherein the ventilation member further comprises a partition wall part (650) disposed between the (1-1)th terminal end part and the (1-2)th terminal end part and between the (2-1)th terminal end part and the (2-2)th terminal end part to segment the first conduit and the second conduit, and
wherein the first conduit and the second conduit have discontinuous loop shapes segmented by the partition wall part.

20. The electronic device of claim 17 or 18, wherein the ventilation member comprises a closed-loop-shaped conduit (640) connected to at least one of the first conduit and the second conduit.

21. The electronic device of any of claims 1 to 19, wherein each of the first conduit and the second conduit is branched into a first passage and a second passage shorter than the first passages with reference to the connection conduit, and
wherein the connection conduit is connected to the first conduit and the second conduit so that an angle (A2) formed by the connection conduit and the second passages is greater than an angle (A1) formed by the connection conduit and the first passages.
